# EUROPEAN PATENT SPECIFICATION

(11) **EP 1 298 538 B1**
(45) Date of publication and mention of the grant of the patent: **30.05.2012**
(21) Application number: 01123128.9
(22) Date of filing: 27.09.2001
(51) Int. Cl.: G06F 17/30

(54) **Method and computer system for identifying object suppliers in a computer network**
Verfahren und Vorrichtung zur Identifizierung von Bereitstellen von Objekten in einem Computernetzwerk
Procédé et système pour identifier des fournisseurs d'objets dans un réseau informatique

(43) Date of publication of application: 02.04.2003
(73) Proprietor: SAP AG, 69190 Walldorf (DE)
(72) Inventor: Brendle, Rainer, Dr., 69151 Neckargemünd (DE)
(74) Representative: Rocke, Carsten

(56) References cited:
- EP-A1- 1 298 537
- GB-A- 2 294 132
- FAN L ET AL: "SUMMARY CACHE: A SCALABLE WIDE-AREA WEB CACHE SHARING PROTOCOL" IEEE / ACM TRANSACTIONS ON NETWORKING, IEEE INC. NEW YORK, US, vol. 8, no. 3, June 2000 (2000-06), pages 281-293, XP000947331 ISSN: 1063-6692
- ROUSSKOV A ET AL: "Cache digests" COMPUTER NETWORKS AND ISDN SYSTEMS, NORTH HOLLAND PUBLISHING. AMSTERDAM, NL, vol. 30, no. 22-23, 25 November 1998 (1998-11-25), pages 2155-2168, XP004152168 ISSN: 0169-7552
- MAKPANGOU M ET AL: "REPLICATED DIRECTORY SERVICE FOR WEAKLY CONSISTENT DISTRIBUTED CACHES" PROCEEDINGS OF THE 19TH INTERNATIONAL CONFERENCE ON DISTRIBUTED COMPUTING SYSTEMS. ICDCS '99. AUSTIN, TX, MAY 31 - JUNE 4, 1999, INTERNATIONAL CONFERENCE ON DISTRIBUTED COMPUTING SYSTEMS, LOS ALAMITOS, CA: IEEE COMPUTER SOC, US, 31 May 1999 (1999-05-31), pages 92-100, XP000883606 ISBN: 0-7803-5706-X

## Description

### Field of the Invention

The present invention generally relates to electronic data processing, and more particularly, relates to method, computer program product and system for adjusting caches in a network.

### Background of the Invention

Client-server technology was introduced in the early 90s of the 20^{th} century to achieve a high degree of scalability in corporate computer networks. Scalability of a computer system means that system performance can be improved by adding more hardware in a linear way. System performance can be measured by the time the system needs to respond to an user interaction (response time of the system).

An example for a client-server system is the SAP R/3™ system, where one database server stores all application data. The database server can be accessed substantially simultaneously by a plurality of application users using a plurality of client computers. Each client computer accesses at least an application server. A plurality of application servers accesses the database server. Application servers handle the application logic, thus taking away load from the database server. By increasing the number of application server computers, almost a deliberate number of users can work on the same database system, because the load is balanced between the database system and all application server computers. The application servers store copies of original database objects in a so-called buffer area (cache) of their memories to reduce the number of accesses to the original database objects.

With the extension of internal corporate networks through internet applications the number of users in a corporate network becomes much larger than the number of users in an internal client-server system. Further, internet applications do not have exactly one source of objects, such as application data, as it is the case in client-server systems, where all objects are stored on one database server.

GB 2 294 132 A discloses semi-permanently storing data obtained from an information provider in the cache memory of a node local to the users, whence it can be supplied to other users upon request.

"Summary Cache: A Scalable Wide-Area Web Cache Sharing Protocol", Li Fan et. al. published in IEEE/ACM Transactions on Networking, Vol. 8, No. 3, June 2000, pp. 281 - 293 discloses a protocol for sharing of caches among Web proxies, according to which each proxy keeps a summary of the cache directory of each participating proxy and checks these summaries for potential hits before sending any queries.

"Cache Digests", A. Rousskov et. al., published in Computer Networks and ISDN Systems 30 (1998), pp. 2155-2168 discloses a protocol and optimization technique for cooperative web caching.

"Replicated Directory Service for Weakly Consistent Distributed Caches", M. Makpangou et. al, published in Proc. of the 19^{th} International Conference on Distributed Computing Systems ICDCS'99; Austin Texas, May 31- June 4, 1999, pp. 92 - 100, discloses a web caching method within organizational boundaries.

"A scalable Web Cache Consistency Architecture", H. Yu, et al., Computer Communication Review, ACM, 1999-10-01, pages 163 to 174 discloses a scalable web cache consistency architecture using mutlicast-based invalidation approach. In this approach, multicast groups are associated with caches and the caches send heartbeats to each other that are equivalent to cache-to-cache-volume leases. Caches maintain a server table in order to locate where servers are attached to the hierarchy. Client requests are forwarded through the caching hierarchy to the server or to the first cache containing a valid copy of the requested page.

### Summary of the Invention

Hence, the present invention provides computer-implemented method, computer program product and computer system to solve a technical problem of substantially simultaneous access by a deliberate number of users to an object that is stored in a computer network, such as the internet.

The idea of the present invention is to overcome this problem by removing a bottleneck that exists in prior art systems in which data, which have to be shared between several computers, only can reside on one single central location (e.g. a specific database server computer) in the network.

The present invention takes advantage of the fact that most objects are not needed in an absolutely temporal precise manner but still have to be consistent within a certain time interval. For example, objects having a static character, such as master data of an application system, can be "buffered" in a cache of a network computer because they are rarely changed. "Buffer" stands for storing a copy of the object intermediately in a cache memory portion of the network computer. Thus, the retrieval of an object directly from a corresponding database, which is slower than the retrieval from a cache memory, can be avoided as long as no modification is applied to the object and the buffered copy of the object in the cache is identical with the original object in the database.

A further technical problem is consistency of multiple copies of the same object in multiple caches to prevent a computer user from working with an old version of the object.

The aforementioned technical problems are fulfilled by a computer-implemented method having the features disclosed in claim 1, a computer program product having the features disclosed in claim 3, a computer system having the features disclosed in claim 4, a cache computer having the features disclosed in claim 6 and a data carrier having the features disclosed in claim 8. Preferred embodiments are defined in the dependent subclaims.

According to the present invention, in a large computer network, such as the internet, substantially simultaneous access to an object by a large number of users is achieved by storing buffered copies of the object in the caches of a plurality of network computers. Each buffered copy of the object should be identical with the original object that is stored somewhere in a database of a network computer. The inventive method, computer system and computer program products provide a consistent copy of the object at a network computer where the object is requested, rather than retrieving the original object from the database each time when a user tries to access.

Before explaining how the features of the present invention solve the technical problems, the following terms and abbreviations that are used throughout the description are defined:
Object: a data structure with a specific meaning within a specific context (e.g. tables, files, application objects, web page content, query results). Preferably, an object is stored on an origin computer. Various actions (A), such as create (C), modify (M) or delete (D), can be applied to the object on the origin computer. To accelerate access to the object, various copies of the object can be stored on multiple computers. Preferably, these copies are stored in a cache memory. In the following description copies of an object are sometimes also referred to as "object".
Valid copy: a copy of an object that is stored in a cache and is consistent with the original object. If the original object is modified, a corresponding copy becomes obsolete and, therefore, invalid.
Origin computer (O-computer, OC): computer, where an original object is stored (e.g. web application, table, etc.). Preferably, an O-computer is a database computer.
Cache computer (C-computer, CC): computer that stores objects of at least one origin computer in a cache memory and forwards objects to further cache computers on request.
Supplier, supplying computer: preferably, a C-computer that stores a copy of a requested object in its cache.
Requestor, requesting computer: a computer (e.g. client computer, C-computer) sending a request for an object to a supplier.
Cache: Cache memory on a C-computer to intermediately store copies of objects of a corresponding O-computer. A C-computer can have multiple caches.
Journal: a data structure to store journal entries that track the change history of objects on at least one O-computer. A journal entry corresponds to a modification of an object on the O-computer. Preferably, the journal exists on a C-computer. Thereby, all journal entries referring to a specific O-computer have a relative time stamp indicating the temporal order of the corresponding object modifications.
Universal sequence number (USN): numbers that are generated as strictly increasing (or strictly decreasing) numbers over time. Preferably, USNs are of type integer. Preferably, with each modification of an object on an O-computer, a corresponding journal entry is created with a new USN on a corresponding C-computer. Preferably, a journal entry with a higher absolute USN value for a specific O-computer was generated later than a journal entry with a lower absolute USN value for this O-computer. A journal entry having the highest absolute USN value for an 0-computer is referred to as "the latest journal entry referring to the O-computer".
Synchronization: as used hereinafter, synchronization (or the verb synchronizing) is used to describe making at least a part of a first data structure on a first C-computer equal to at least a corresponding part of a second data structure on a second C-computer.
Content digest (CD): a sequence of a plurality of bit patterns on a C-computer, wherein each bit pattern is a representation of an object that is stored in the cache of the C-computer.
Digest matrix (D-matrix): a matrix that is stored on a C-computer and that comprises for each C-computer in the network the ID of the C-computer and the content digest of the C-computer. Preferably, the D-matrix of a C-computer is updated with every S-trigger.
Transmit, send: the verbs transmit and send stand for making data available from a first to a second computer. Thereby, the original data typically remain on the first computer and a copy of the data is received by the second computer.

The present invention solves the aforementioned problem of removing the object access bottleneck in prior art systems by routing an object request to a cache computer that stores an appropriate copy of the requested object. Further, according to the present invention the copy is distributed to the requesting computer, thus increasing the number of suppliers for the requested object by one. This is achieved through the features of a computer-implemented object-supplier-identification that is described as computer-implemented methods, computer system and corresponding computer program products.

In an embodiment due network comprises a first computer having a first cache and a second computer having a second cache. The method comprises the following steps:
a) receiving on the first computer a request for a an object;
b) checking the first cache for a copy of the object;
c) if the first cache has the copy, answering the request with the copy; and
d) if the first cache does not have the copy, identifying the second computer as supplier of a further copy of the object by using a predefined digest matrix of the first computer. The digest matrix indicates that the further copy is stored in the second cache of the second computer.

The advantage is that the first cache computer receiving the object request, almost immediately, identifies another second cache computer that can deliver on the request. This avoids the slower direct database access to the corresponding origin computer. It further saves bandwidth in the network because only one other cache computer is queried, instead of querying a plurality of other cache computers by accident.

The method optionally comprises the steps e) to g) to further provide an object distribution mechanism; :
e) if the first cache does not have the copy, forwarding the request for the object from the first computer to the second computer.
d) transmitting the further copy from the second cache to the first cache;
e) the first computer answering the request;
f) updating the first digest matrix according to the first cache; and
g) synchronizing the second digest matrix with the first digest matrix.

The advantage of this object distribution mechanism is the availability of the requested object on the first and second cache computers and the exchange of information about this availability. Therefore, If a further request for the object is directed to the first cache computer, the request is instantly answered from the first cache. If the request is directed to a further cache computer with a further, synchronized digest matrix, there are now two suppliers (first and second computer) to deliver on the request.

The method further comprises steps h) to k) :
h) if the first cache has an invalid copy of the object, optionally responding to the request with a message;
i) checking the validity of the further copy in the second cache;
j) if the further copy is invalid, optionally responding to the request with a message.
k) if the further copy is invalid, adjusting the second cache, accordingly.

The advantage of features h), i) and j) is a notification of the requesting computer in case the request can't be fulfilled for any reason by the queried computer. Feature k) allows a cache computer to delete obsolete copies of the object from its cache.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of the inventive computer system;
- FIG. 2: illustrates details of two different states of a preferred embodiment of the computer system;
- FIG. 3: illustrates further details of the preferred embodiment of the computer system;
- FIG. 4: illustrates simplified flowchart diagrams of a method according to the present invention;
- FIG. 5: illustrates simplified flowchart diagrams of a further method according to the present invention;
- FIG. 6: illustrates details of a mechanism to scan a content digest for a specific object representation;
- FIG. 7: illustrates an example of the inventive computer system; and
- FIG. 8: illustrates preferred embodiments of two complementary computer program products according to the present invention.

### Detailed Description of the Invention

Wherever possible, the same reference numbers will be used throughout the drawings to refer to the same or like parts. For convenience of explanation a list of references is provided prior to the claims.

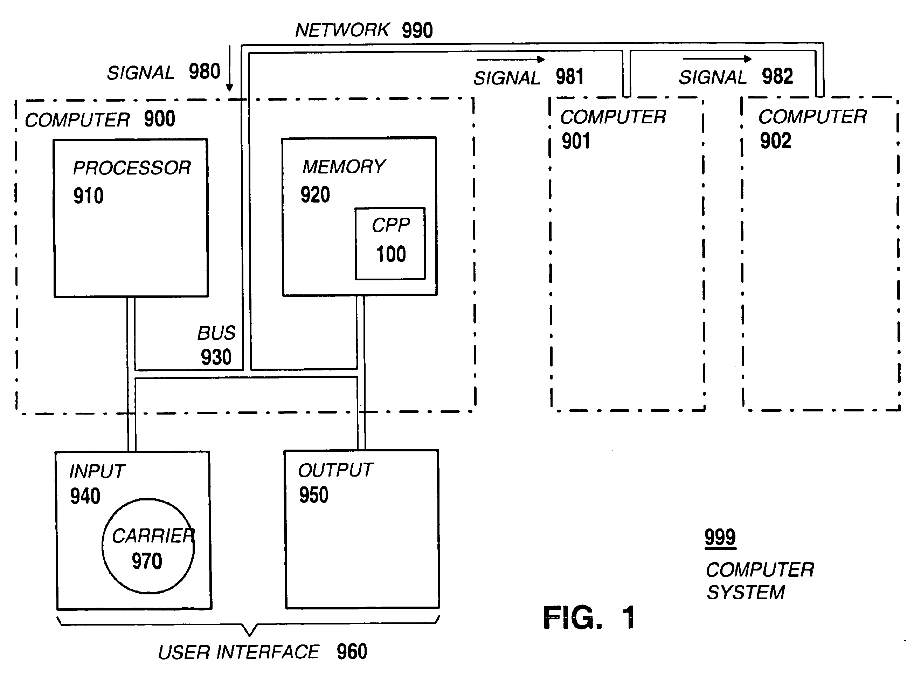

FIG. 1 illustrates a simplified block diagram of the inventive computer system 999 having a plurality of computers 903, 904, 902 (or 90q, with q=0...Q-1, Q any number).

Computers 903-902 are coupled via inter-computer network 990. Computer 903 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 903, computer 904/902 is sometimes referred to as "remote computer", computer 904/902 is, for example, a server, a router, a peer device or other common network node, and typically comprises many or all of the elements described relative to computer 903. Hence, elements 100 and 910-980 in computer 903 collectively illustrate also corresponding elements 10q and 91q-98q (shown for q=0) in computers 90q.

Computer 903 , for example, is a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 903, memory function can also be implemented in network 990, in computers 904/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 903 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 903 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 903 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 903. For communicating CPP 100 to computer 903, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 903.

Having described CPP 100, program carrier 970, and program signal 980 in connection with computer 903 is convenient. Optionally, program carrier 971/972 (not shown) and program signal 981/982 embody computer program product (CPP) 101/102 to be executed by processor 911/912 (not shown) in computers 904/902, respectively.

Input device 940 symbolizes a device that provides data and instructions for processing by computer 903. For example, device 940 is a keyboard, a pointing device (e.g., mouse, trackball, cursor direction keys), microphone, joystick, game pad, CCanner. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 903 are conveniently referred to as "bus 930", connections between computers 903-902 are referred to as "network 990". Optionally, network 990 comprises gateways being computers that specialize in data transmission and protocol conversion.

Devices 940 and 950 are coupled to computer 903 by bus 930 (as illustrated) or by network 990 (optional). While the signals inside computer 903 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 903 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

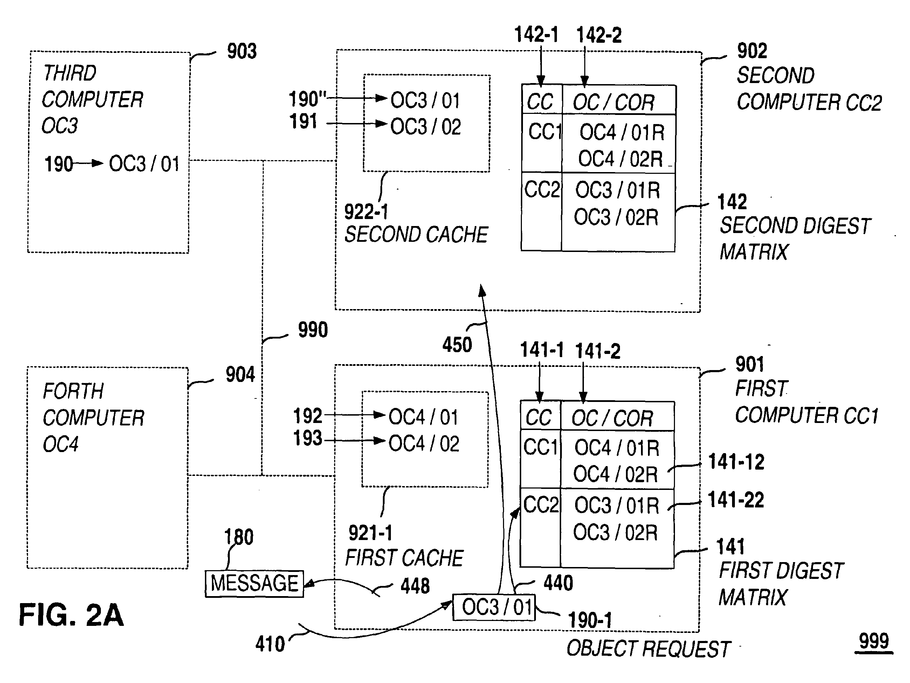

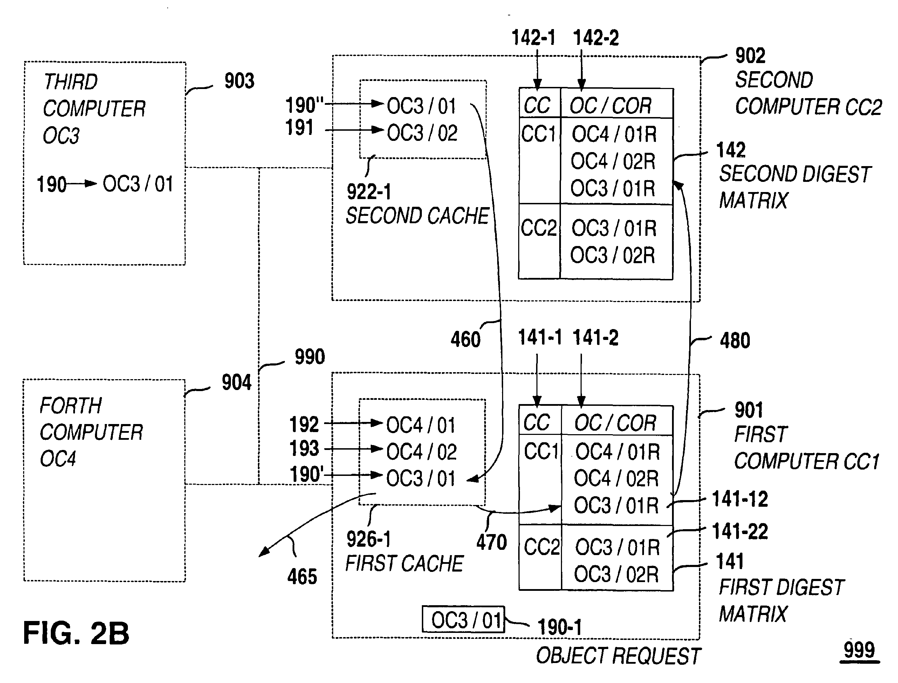

FIG. 2 illustrates details of two different states (FIG. 2A, FIG. 2B) of a preferred embodiment of computer system 999. Hardware components of computer system 999 are illustrated by dotted lines or frames, whereas software related components are illustrated by solid lines or frames. For convenience of understanding, IDs (e.g. OC3 for third computer 903) and values (e.g. OC3/2 for S-mark 121-2) that are used in the example are sometimes written in parenthesis following the reference number.

For convenience of explanation, FIG. 2A shows four computers 901, 902, 903, 904 of computer system 999 that are connected via network 990. First computer 901 (CC1) and second computer 902 (CC2) are C-computers. Third computer 903 (OC3) and forth computer 904 (OC4) are O-computers. There can be a deliberate number of C-computers and 0-computers in computer system 999.

First computer 901 (CC1) has first cache 921-1. In the example, first cache 921-1 stores objects 192 (OC4/01) and 193 (OC4/02). For example, objects 192, 193 were previously loaded from forth computer 904 (OC4) or from a further cache computer. Second cache 922-1 stores objects 190'' (OC3/01) and 191 (OC3/02). Object 190'' is a cached copy of the original object 190 on third computer 903 (OC3). For example, objects 190'', 191 were previously loaded from third computer 903 (OC3) or from a further cache computer.

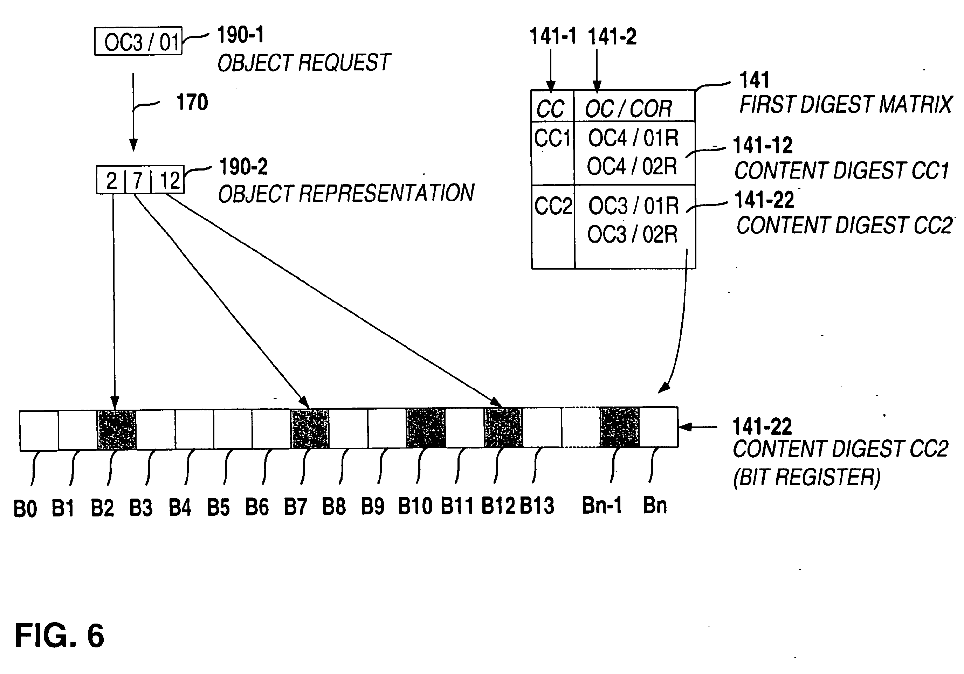

Further, first computer 901 has first digest matrix 141 and second computer 902 has second digest matrix 142. For convenience of explanation, the data structure of a digest matrix is explained by using the example of first digest matrix 141. First digest matrix 141 comprises column 141-1 (CC) and column 141-2 (OC/COR). Column 141-1 stores IDs of C-computers (e.g. CC1, CC2) of computer system 999. Column 141-2 stores a content digest (e.g. content digest CC1 141-12) of the corresponding C-computer in column 141-1. Preferably, digest matrix 141 has a content digest for each C-computer in computer system 999. Each content digest comprises representations of objects that are stored in the cache of the corresponding C-computer. Preferably, each object representation is implemented as a bit pattern. For example, the object representations OC3/01R and OC3/02R represent the objects 190'' (OC3/01) and 191 (OC3/02) of second computer 902 (CC2), respectively. Details about object representations are explained under FIG. 6. Second digest matrix 142 comprises columns 142-1 and 142-2 that are functionally equivalent with columns 141-1 and 141-2, respectively.

First computer 901 receives 410 request 190-1 for object 190. The requestor can be any other computer in computer system 999, e.g. a client computer operated by a human user. For example, request 190-1 has the format of an object key (e.g. OC3/01).

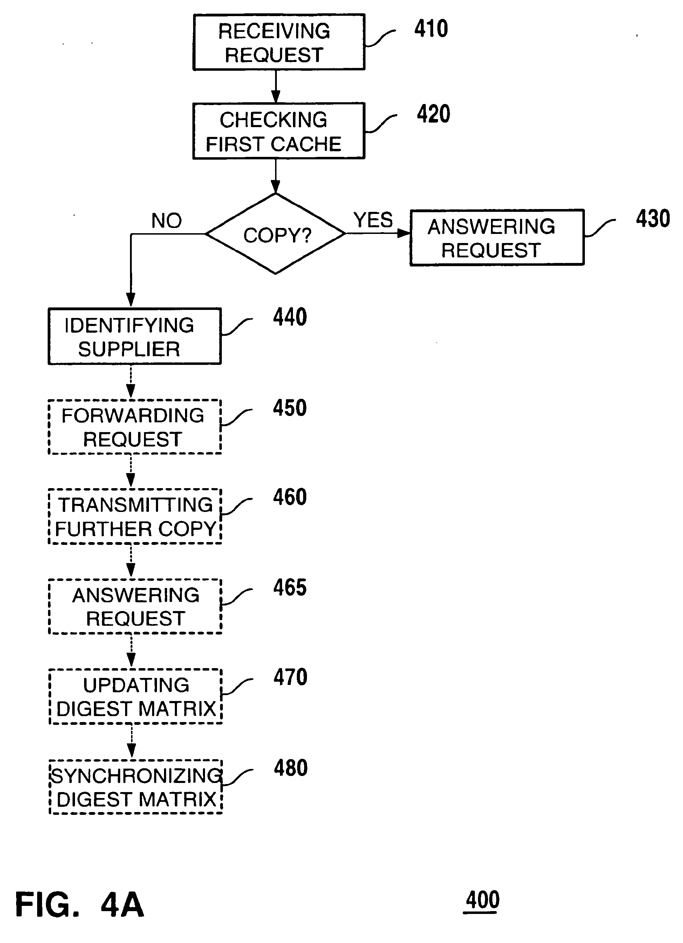

First computer 901 checks 420 (cf. FIG. 4A) first cache 921-1 for a copy 190' of the object 190. For example, this is achieved by comparing request 190-1 with a comparable portion (e.g. object key) of objects stored in first cache 921-1. A further example is scanning content digest 141-12, as explained under FIG. 6. If first cache 921-1 has a copy (e.g. 190') of requested object 190 it answers 430 the request 190-1 by sending the copy 190' to the requestor.

If first cache 921-1 has no copy (e.g. 190'), optionally, first computer 901 sends 448 message 180 to the requestor (not shown) to convey the information to the requestor that requested object 190 is not immediately available. First computer 901 identifies 440 second computer 902 as supplier of further copy 190'' of the requested object 190. First computer 901 uses predefined digest matrix 141 of first computer 901. In the example, content digest 141-22 of C-computer 902 (CC2) comprises the object representation OC3/01R of the requested object 190 (OC3/01), indicating that further copy 190'' is stored in second cache 922-1 of second computer 902.

A supplier (CC2) for the requested object is now identified.

Having identified second computer 902 as supplier, first computer 901 (CC1) forwards 450 request 190-1 to second computer 902 (CC2), to retrieve further copy 190'' from second cache 922-1.

FIG. 2B illustrates computer system 999 after synchronizing 480 second digest matrix 142 with first digest matrix 142.

Second computer 902 (CC2) transmits 440 object 190 from second cache 922-1 to first cache 921-1. Thereby, first computer 901 stores copy 190' in first cache 922-1.

First computer 901 (CC1) updates 470 its content digest 141-22 in first digest matrix 141 by adding an object representation (OC3/01R) for object 190.

To inform second computer 902 about the current cache content of first cache 922-1, first computer 901 sends updated first digest matrix 141 to second computer 902. Then, second computer 902 (CC1) synchronizes 480 second digest matrix 142 with updated first digest matrix 141.

An advantage of the present invention is the availability of the same object 190 (OC3/01) in computer system 999 in the form of buffered copies 190', 190'' on multiple computers 901, 902, respectively. Therefore, the bottleneck of a single source of data for object 190 in computer system 999 is removed. Further, the information about the multiple storage locations of an object is spread by synchronizing the digest matrices of C-computers in computer system 999. The advantage is an efficient routing of an object request to a supplier of the object by identifying the supplier via a digest matrix.

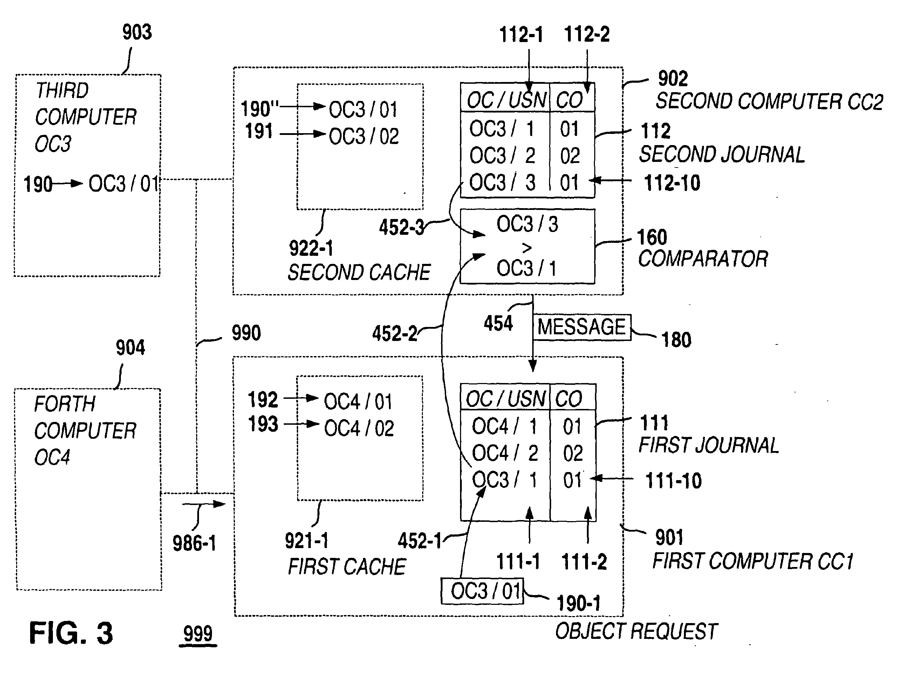

FIG. 3 illustrates further details of the preferred embodiment of computer system 999 with the four computers 901, 902, 903, 904 that are described under FIG. 2. As in FIG. 2, hardware components of computer system 999 are illustrated by dotted lines or frames, whereas software related components are illustrated by solid lines or frames.

First computer 901 stores first journal 111. First journal 111 comprises all journal entries relating to object modifications on forth computer 904. In the example, first journal 111 further stores journal entry 111-10 (OC3/1) that corresponds to a modification of object 190 (OC3/01) on third computer 903 (OC3). Second computer 902 stores second journal 112. Second journal 112 comprises all journal entries relating to third computer 903. Optionally, second journal 112 stores additional entries that refer to further origin computers. It is not important for the present invention, how journal entries originating in an origin computer are transmitted to a corresponding journal of a cache computer, where the origin computer is assigned to. Preferably, the origin computer intermediately stores the journal entries and the cache computer loads new journal entries of the assigned origin computer at predefined time intervals.

For convenience of explanation, a preferred data structure of a journal is explained by using journal entry 112-10 of second journal 112 as an example. In the example, journal entry 112-10 refers to third computer 903 (OC3). Preferably, journal entry 112-10 has a key that comprises a relative timestamp for the journal entry. That is, the relative timestamp indicates for each journal entry referring to a specific origin computer if the journal entry was generated before or after another journal entry. Therefore, the relative temporary order of the corresponding object modifications on the specific origin computer is known. Preferably, journal entry key 112-1 comprises an ID (OC) of the corresponding O-computer (e.g. OC3) and an USN (e.g. 1). Further, journal entry 112-10 comprises the ID (e.g. 01) of the modified object (e.g. 01, 02) in column 112-2. Journal 111 comprises columns 111-1 and 111-2 that are functionally equivalent to columns 112-1 and 112-2 respectively. A person of skill in the art can synchronize first and second journals 111, 112. For example, techniques for synchronizing journals are described for database computers (cf.: Flexible Update Propagation for Weakly Consistent Replication; K. Petersen, M. J. Spreitzer, D. B. Terry, M. M. Theimer, and A. J. Demers; Proceedings of the 16th ACM Symposium on Operating Systems Principles (SOSP-16), Saint Malo, France, October 5-8, 1997, pages 288-301).

In the example, the assumption is made that new journal entries (e.g. 112-10) were generated in second journal 112, since the last synchronization occurred between first and second journals 111, 112. First journal entry 111-10 indicates the relative timestamp (OC3/1) of the last synchronization.

When first computer 901 forwards 450 (cf. FIG. 2A) object request 190-1 to second computer 902, information about a relative timestamp for the requested object 190 is also transmitted 452-2 from first computer 901 to second computer 902. In the example, first computer 901 identifies 452-1 journal entry 111-10 of first journal 111 as the latest, most current journal entry referring to requested object 190.

Comparator 160 of second computer 902 compares 452-3 the relative timestamps of latest second journal entry 112-10 (referring to requested object 190) and latest first journal entry 111-10. In the example, the relative timestamp of second journal entry 112-10 (OC3/3) was generated later than the relative timestamp of first journal entry 111-10 (OC3/1), which is derived from the higher USN portion (3 > 1) of the journal key. This indicates a high probability, that copy 190'' (of object 190) that is stored in second cache 922-1 is still a valid copy, because object 190 was not modified since it was loaded into second cache 922-1. The probability depends on the quality of the journal synchronization amongst all cache computers of computer system 999. To guarantee a high probability for the validity of a cached object copy, a C-computer deletes obsolete object copies from its cache. For example, obsolete copies in a cache are detected when synchronizing the journal of a cache computer with the journal of a further cache computer and a journal entry of the further cache computer indicates a modification of a cached object that occurred after the caching of the object.

Because copy 190'' is valid, second cache 922-1 transmits 460 (cf. FIG. 2B) copy 190'' to first cache 921-1 to answer request 190-1.

In case second computer 902 recognizes that cached copy 190'' is invalid (e.g. when the relative timestamp of second journal entry 112-10 was generated earlier than the relative timestamp of first journal entry 111-10), second computer optionally sends 454 message 180 to first computer. Message 180 indicates that no valid copy of requested object 190 is available in second cache 922-1. Further, second computer 902 deletes the invalid copy from its cache. In a preferred embodiment of the present invention, second computer 902 then tries to identify a further supplier of requested object 190 by using second digest matrix 142 according to the inventive method 400 described under FIG. 2A. In this case, second computer 902 gets the role of first computer 902 and the further supplier (further cache computer, not shown) gets the role of second computer 902.

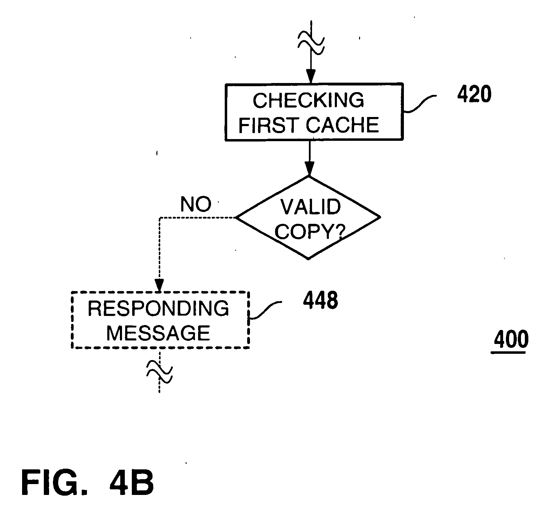

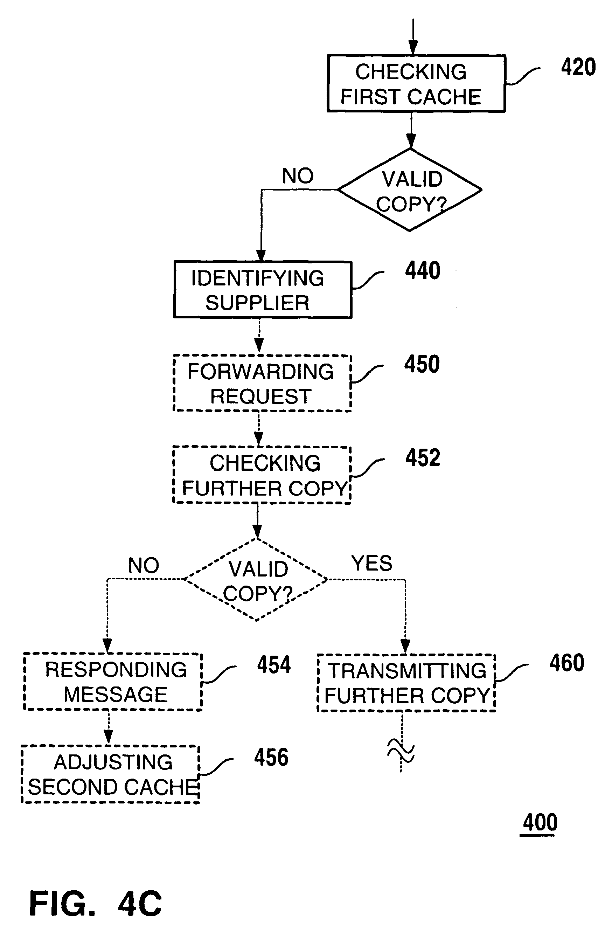

FIG. 4 illustrates simplified flowchart diagrams (FIGS. 4A, 4B, 4C) of method 400 according to the present invention. Method 400 is for identifying a supplier cache computer (e.g. CC2) for a requested object (e.g. OC3/01). Optional steps of method 400 allow the distribution of a copy (e.g. 190'') of the requested object across multiple cache computers in computer system 999. Mandatory steps of method 400 are illustrated by solid frames, whereas optional steps are illustrated by dashed frames. The flowchart diagrams illustrate a preferred order of the method steps without the intention of limiting the invention. Optionally, the steps can also be executed in a different order.

Preferably, method 400 involves first computer 901 (cf. FIG. 2A) having first cache 921-1 (cf. FIG. 2A) and at least second computer 902 (cf. FIG. 2A) having second cache 922-1 (cf. FIG. 2A).

FIG. 4A illustrates method 400 comprising the steps:
receiving 410, checking 420, answering 430 and identifying 440.

Method 400 comprises the further steps:
forwarding 450, transmitting 460, answering 465, updating 470 and synchronizing 480.

The steps are now explained in detail.

In the receiving 410 step, first computer 901 receives request 190-1 for object 190. For example, the request 190-1 is launched by a user via a further computer in computer system 999 that serves as a client computer for the user. For example, object 190 stores bank account information of a specific customer of the user and the user wants to review this information.

In the checking 420 step, first computer 901 checks 420 first cache 921-1 for a copy (e.g. 190') of object 190. For example, request 190-1 has the format of an object key (OC3/01). In this case, first computer scans first cache 921-1 and compares request 190-1 with object keys of objects 192, 193 (OC4/01, OC4/02).

If first cache 921-1 has a copy (190') of requested object 190, first computer 901 answers 430 the request 190-1 in the answering 430 step by sending the copy 190' to the requesting computer (e.g. the client computer of the user).

In the example, first cache 921-1 does not have copy 190'. In this case, in the identifying 440 step, first computer 901 identifies 440 second computer 902 as supplier of further copy 190'' of object 190. First computer 901 uses predefined first digest matrix 141 (cf. FIG. 2A) of first computer 901. In the example, digest matrix 141 indicates that further copy 190'' is stored in second cache 922-1 of second computer 902 (CC2) because content digest 141-22 (cf. FIG. 2A) for second computer 902 (CC2 in column 141-1, cf. FIG 2A) has a representation (OC3/01R) of object 190 (OC3/01). A preferred embodiment of a mechanism to compare an object request with the content of a content digest is explained in detail under FIG. 6.

It is an advantage of the invention that method 400 provides a solution to the problem of identifying a supplier of a requested object 190 within computer system 999. Preferably, the supplier is a cache computer (e.g. CC2) that can deliver a cached copy (e.g. 190'') of the object 190 faster than the origin computer (e.g. OC3) can deliver the original object 190.

The steps of method 400 allow computer system 999 to distribute a copy of the requested object 190 from supplying second computer 902 to requesting first computer 901, thus first computer 901 becoming a possible supplier once the steps of method 400 are executed.

In the forwarding step 450, after having identified second computer 902 as supplier, first computer 901 forwards 450 request 190-1 to second computer 902.

In the transmitting step 460, second computer 902 retrieves further copy 190'' from second cache 922-1 and transmits 460 further copy 190'' to first cache 921-1.

In the answering 465 step, first computer 901 answers 465 the request 190-1 of the user by sending further copy 190'' to the corresponding requesting computer (e.g. the client computer of the user). Preferably, first computer 901 stores further copy 190'' as copy 190' in first cache 921-1.

In the updating 470 step, first computer 901 updates first digest matrix 141 according to first cache 921-1. That is, a representation (OC3/01R) of object 190 is added to content digest 141-12 of CC1 because copy 190' was added to first content cache 921-1.

In the synchronizing 480 step, second computer 902 receives updated first digest matrix 141 from first computer 901. Second computer 902 synchronizes second digest matrix 142 with first digest matrix 141. Preferably, content digests (e.g. 141-12) of first digest matrix 141 that refer to C-computers different from second computer 902 (CC2) replace the corresponding entries in second digest matrix 142. The second digest matrix entry referring to CC2 remains unchanged because second computer 902 knows the content of its own second cache 922-1 better than any other C-computer in computer system 999. Therefore, second computer 902 does not allow other C-computers, such as CC1, to update this information.

FIG. 4B illustrates further optional method 400 step responding 448. Preferably, the responding 448 step is performed after the checking step 420 in case that no copy of requested object 190 is in first cache 921-1. First computer 901 then responds to request 190-1 with message 180. For example, message 180 indicates to the user that first computer 901 cannot immediately supply the requested object information.

FIG. 4C illustrates further optional method 400 steps to prevent second computer 902 from transmitting an obsolete copy of object 190 to first computer 901. The additional optional steps are:
checking 452, responding 454 and adjusting 456.

The additional steps are now explained in detail.

In the checking 452 step, second computer 902 checks the validity of further copy 190'' in second cache 922-1. Preferably, checking 452 is performed as described under FIG. 3, by performing steps 452-1, 452-2 and 452-3 using comparator 160.

In case, further copy 190'' proves to be valid, transmitting step 460 is performed.

In case, further copy 190'' is invalid (obsolete), in the responding 454 step second computer responds to request 190-1 of first computer 901 with message 180. For example, message 180 indicates that further copy 190'' is obsolete. Preferably, second computer 902 then adjusts 456 second cache 922-1 by deleting obsolete further copy 190''.

There are various options for computer system 999 to react. For example, first computer 901 can repeat step 440 to identify via its digest matrix 141 a further supplier (C-computer, not shown). Then, method 400 is continued with the further supplier playing the role of second computer 902. Alternatively, second computer 902 can play the role of first computer 901 in method 400 and use its own digest matrix 142 to identify the further supplier. The further supplier plays the role of second computer 902. Both alternatives can be repeated by computer system 999 until a valid copy of object 190 is retrieved from a cache within computer system 999. If no cached copy of requested object 190 is available in computer system 999, the system behaves like a prior art system and retrieves original object 190 directly from the corresponding 0-computer 903 (OC3). The cache computer that retrieves object 190 from OC3 stores a copy of the object in its cache and updates its digest matrix accordingly, thus becoming a supplier according to the invention.

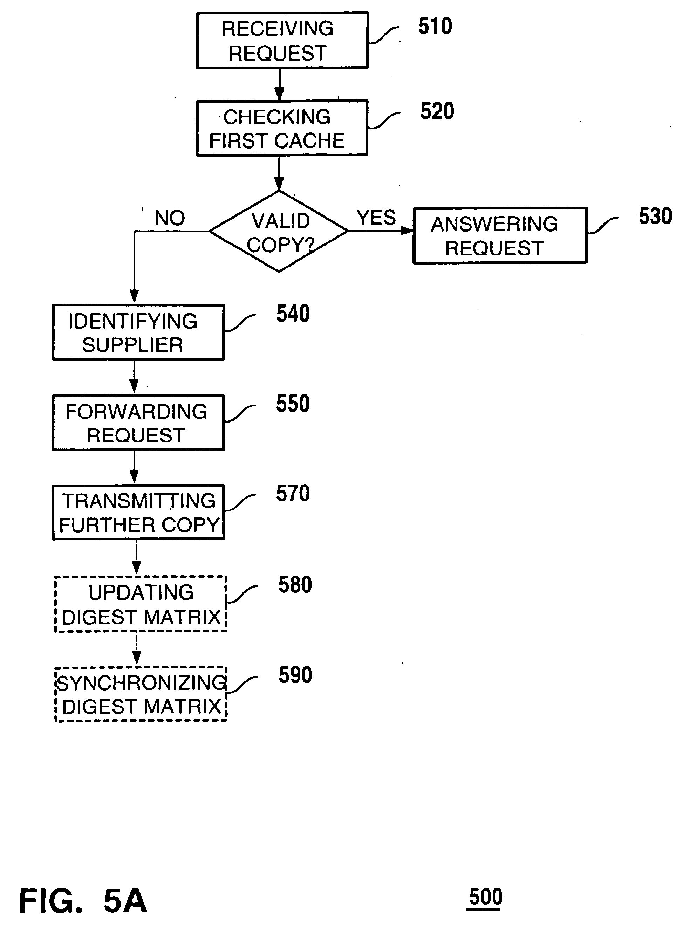

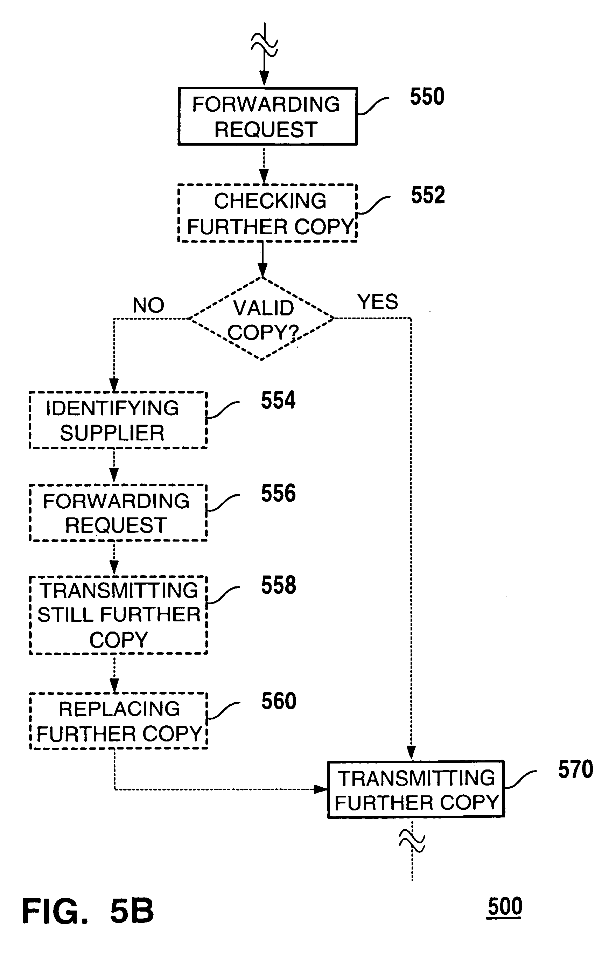

FIG. 5 illustrates simplified flowchart diagrams of further method 500 according to the present invention. Method 500 is for distributing a cached copy of a requested object from a supplying cache computer to a requesting cache computer. Mandatory steps of method 500 are illustrated by solid frames, whereas optional steps are illustrated by dashed frames. The flowchart diagrams illustrate a preferred order of the method steps without the intention of limiting the invention. Optionally, the steps can also be executed in a different order.

FIG 5A illustrates method 500 comprising the following steps:
receiving 510, checking 520, answering 530, identifying 540, forwarding 550 and transmitting 570.

Method 500 comprises the further steps:
updating 580 and synchronizing 590.

Steps 510, 520, 530, 540, 550, 570, 580 and 590 of method 500 correspond to steps 410, 420, 430, 440, 450, 460, 470 and 480 of method 400, respectively (as described under FIG. 4).

FIG. 5B illustrates further steps of method 500. Optional step checking 552 corresponds to step checking 452 of method 400, as described under FIG. 4. Steps identifying 554, forwarding 556, transmitting 558 and replacing 560 prevent second computer 902 from transmitting obsolete copy 190'' (cf. FIG. 2B) of object 190 to first computer 901.

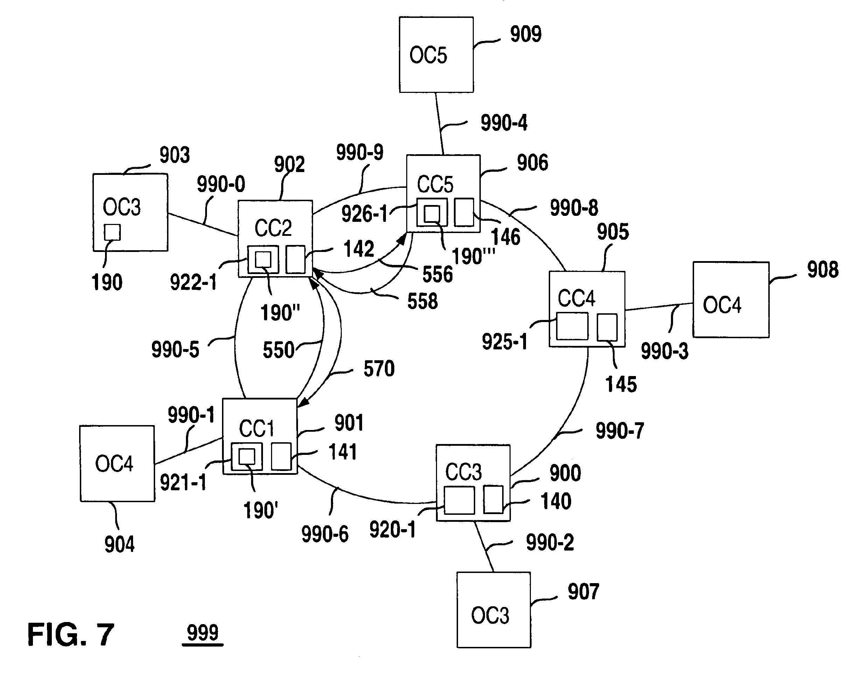

If checking 552 step determines that further copy 190'' in second cache 922-1 is invalid, second computer 902, identifies 554 further cache computer 906 (cf. FIG. 7) as supplier of still further copy 190''' (cf. FIG. 7) of object 190. Second computer 902 uses digest matrix 142 (cf. FIG. 7) of second computer 902 in a way that is functionally equivalent to how first computer 901 uses its digest matrix 141 (cf. FIG. 2). In the example, digest matrix 142 indicates that still further copy 190''' is stored in further cache 926-1 of further computer 905.

In the forwarding step 556, second computer 902 forwards request 190-1 to further computer 905.

In the transmitting step 558, further computer 906 transmits still further copy 190''' from further cache 926-1 to second cache 922-1, thus answering request 190-1.

In the replacing step 560, second computer 902 replaces the value of obsolete further copy 190'' with the value of still further copy 190'''.

Second computer 902 then transmits 570 further copy 190'' to first computer 901 to answer the original request 190-1 received by first computer 901.

A person of skill in the art can apply method 500 as well as method 400 to computer system 999 in such a way that consecutively all cache computers that appear as object suppliers for request 190-1 in any digest matrix of any cache computer are queried to answer request 190-1. Once a valid copy of requested object 190 is found on a cache computer, it is transmitted back to the cache computer that forwarded the request. Preferably, the valid copy goes back the same path that request 190-1 used when being forwarded. The advantage is that any cache computer that was queried during the object search finally stores a valid copy of requested object 190 in its cache. The digest matrix of a requesting cache computer is synchronized with the digest matrix of the supplying cache computer after the valid copy was transmitted. Optionally, digest matrices of all cache computers can be synchronized with an independent synchronization mechanism - for example, at predefined time intervals.

FIG. 6 illustrates details of a preferred embodiment of a mechanism to scan content digests (e.g. 141-22) for a representation of an object request (e.g. 190-1).

First digest matrix 141 comprises column 141-1 storing the IDs of C-computers (e.g. CC1, CC2) and column 141-2 storing for each C-computer in computer system 999 (cf. FIG. 2A) a corresponding content digest 141-12, 141-22. For convenience of explanation, content digest CC2 141-22 is used as an example to explain transforming and comparing object representations.

Content digest CC2 141-22 comprises representations (OC3/01R, OC3/02R) of objects 190', 191 (OC3/01, OC3/02 cf. FIG. 2A), which are stored in second cache 922-1. Content digest CC2 141-22 is also illustrated as a bit register B0-Bn. Each object representation in content digest 141-22 corresponds to a bit pattern in the bit register B0-Bn. For example, object 190 corresponds to the bit pattern (B2, B7, B12). A bit pattern can comprise a deliberate number of bits. Bits that are turned on (e.g. bits having a logical "1") to form a bit pattern are grey shaded. Preferably, bloom filters that are known in the art (cf. US patents 6,134,551 /6,073,160 / 5,946,692 / 5,813,000 / 5,701,464), can be used to generate the content digest bit pattern for each object that is stored in the cache of the corresponding C-computer.

In the example, transformer 170 of first computer 901 (CC1) transforms request 190-1 for object 190 (e.g. object key OC3/01) into object representation 190-2. Preferably, first computer 901 applies multiple transformations, such as hash-algorithms known in the art, to object request 190-1. The results of the transformations comply with the results of the bloom filters that are used to generate the content digest. For example, each hash algorithm results in a number that indicates a bit which is turned on in the bit register B0-Bn. In the example, three transformations are applied to object request 190-1 resulting in object representation 190-2. The result is tupel (2,7,12). Object representation 190-2 indicates that second computer 902 (CC2) is a possible supplier of object 190, because the corresponding bits B2, B7 and B12 of bit register B0-Bn are turned on.

An advantage of the described scan mechanism is the compression of object representations in content digests. The compression saves bandwidth when C-computers synchronize their digest matrices, because less data have to be exchanged between the C-computers when compared to an uncompressed content digest.

FIG. 7 illustrates an example of inventive computer system 999, where multiple copies of a requested object 190 are stored in multiple locations of the system.

Preferably, C-computers 900, 901, 902, 905, 906 (CC1-SC5) are connected through network branches 990-5 to 990-9. In the example, a ring-topology is used for the C-computers. The topology is not important for the invention. Corresponding 0-computers 907, 904, 903, 908, 909 (OC1-OC5) are connected to C-computers CC1-CC5 through network branches 990-0 to 990-4. Preferably, each C-computer CC1-CC5 has a cache 921-1, 922-1, 920-1, 925-1, 926-1 and a digest matrix 141, 142, 140, 145, 146, respectively. 0-computer OC3 stores object 190. After having applied inventive method 500 (cf. FIG. 5), C-computers CC1, CC2 and CC5 store cache copies 190', 190'' and 190''' in their caches 921-1, 922-1 and 926-1, respectively. The arrows illustrate method 500 steps forwarding 550 request 190-1 (cf. FIG. 2A) from CC1 to CC2, forwarding 556 request 190-1 from CC2 to CC5, transmitting 558 still further copy 190''' from CC5 to CC22 and transmitting 570 further copy 190'' from CC2 to CC1.

After having described the present invention as computer-implemented method, it will now be described as computer program product that is stored on a computer readable medium (data carrier).

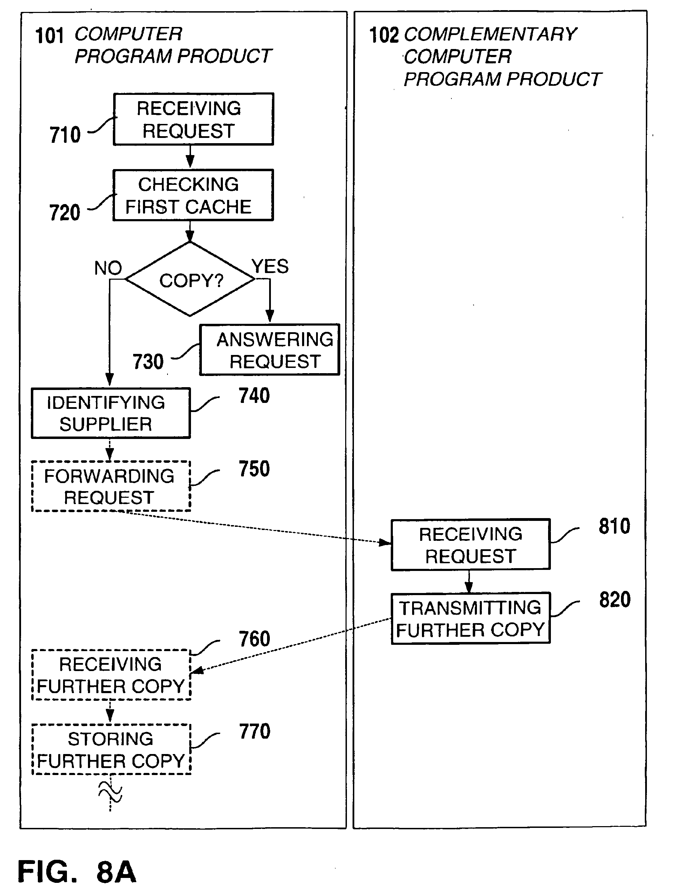

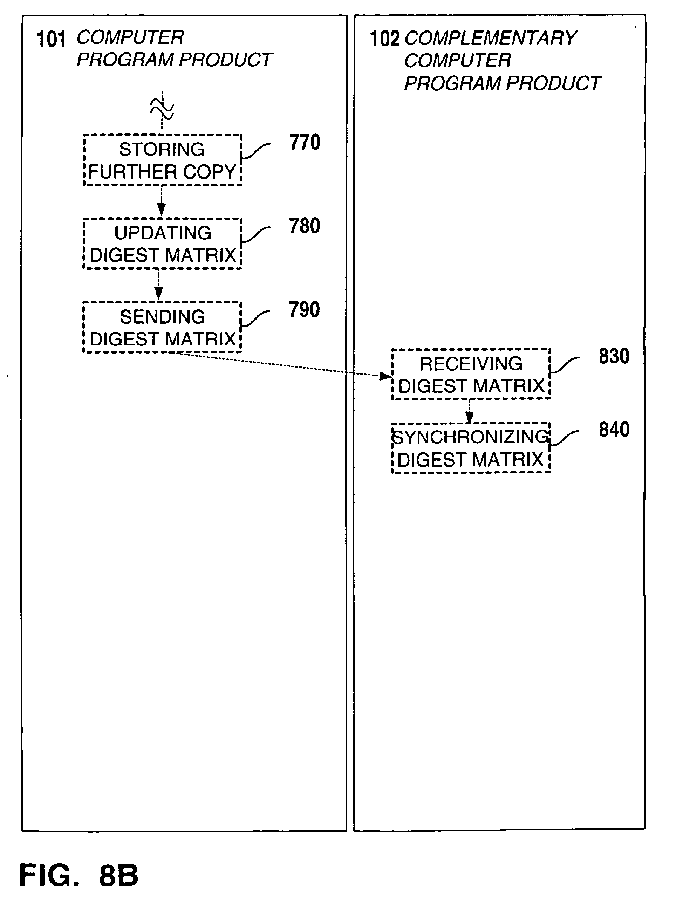

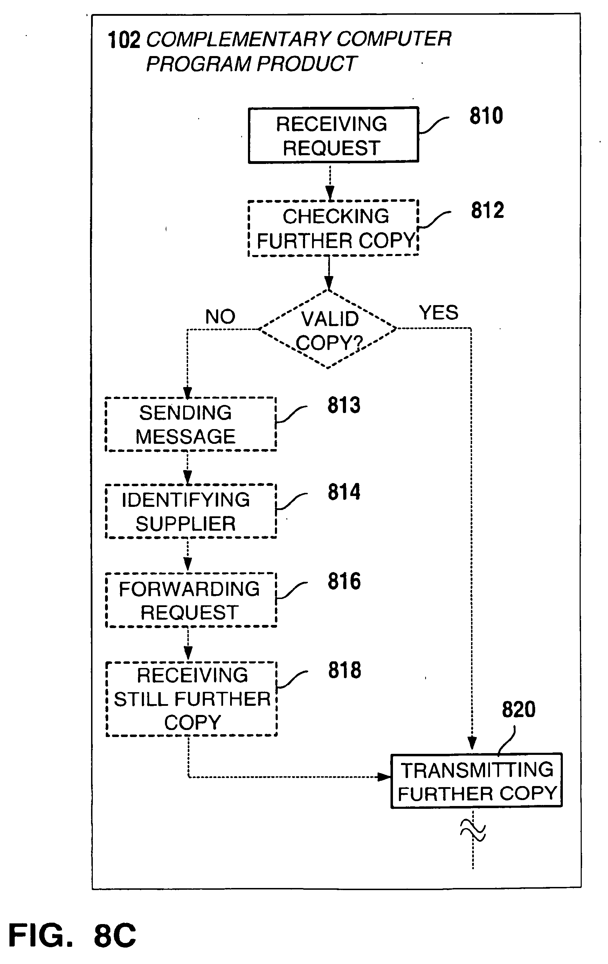

FIG. 8 illustrates computer program product 101 and complementary computer program 102. Computer program products 101 and 102 complement each other when running on two cache computers 901, 902 with similar functionality. For example, computer program 101 is running on cache computer 901 and complementary computer program 102 is running on complementary cache computer 902. Preferably, in computer system 999 (cf. FIG. 7) each cache computer 900, 901, 902, 905 and 906 runs a first computer program that is functionally equivalent to CPP 101 and a second computer program that is functionally equivalent to CPP 102. This allows each cache computer to act as requesting computer and as supplying computer according to the invention.

The arrangement of steps performed by CPP 101 and CPP 102 in FIGS. 8A, 8B indicates the temporal order in which the steps are preferably processed, when both programs are communicating at runtime. The steps at the top are processed first and the ones at the bottom are processed last. Preferably, but not limiting, the steps are processed in the following order: 710, 720, 730, 740, 750, 810, 820, 770, 780, 790, 830 and 840. Program steps illustrated by a solid frame are mandatory in the corresponding computer program product - program steps illustrated by dashed frames are optional.

Referring now to FIG. 8A, CPP 101 has a plurality of instructions for causing processor 911 of computer 901 having cache 921-1 to execute steps for identifying complementary computer 902 having complementary cache 922-1. CPP 101 causes computer 901 to execute the following steps:
receiving 710 request 190-1 for object 190;
checking 720 cache 921-1 for copy 190' of object 190;
if cache 921-1 has copy 190', answering 730 request 190-1 with copy 190'; and
if cache 921-1 does not have copy 190', identifying 740 complementary computer 902 as supplier of further copy 190'' of object 190 by using predefined digest matrix 141 of computer 901, wherein digest matrix 141 indicates that further copy 190'' is stored in complementary cache 922-1 of complementary computer 902.

CPP steps 710-740 correspond to steps 410-440 of method 400 (cf. FIG. 4A)

Optionally, CPP 101 causes computer 901 to execute the following further steps for retrieving further copy 190'' from complementary computer 902:
if cache 921-1 does not have copy 190', forwarding 750 request 190-1 from computer 901 to complementary computer 902;
receiving 760 from complementary cache 922-1 further copy 190''; and
storing 770 in cache 921-1 the further copy 190'' as copy 190' to answer request 190-1.

Step 750 corresponds to step 450 (cf. FIG. 4A). Steps 760, 770 correspond to the part of transmitting step 460 of method 400 that is performed on computer 901 (cf. FIG. 2A).

Referring now to FIG. 8B, CPP 101 optionally causes computer 901 to execute the following further steps for distributing updated information about the content of its cache 921-1:
updating 780 digest matrix 141 according to its cache 921-1 content;
sending 790 digest matrix 141 to complementary computer 902.

Step 780 corresponds to step 470 of method 400. Step 790 corresponds to the part of synchronizing step 480 that is performed on computer 901.

Referring now again to FIG. 8A, CPP 102 has a plurality of instructions for causing processor 912 of complementary computer 902 to execute steps for transmitting further copy 190'' of object 190 that is stored in complementary cache 922-1 of complementary computer 902 to cache 921-1 of computer 901. CPP 102 causes complementary computer 902 to execute the following steps for answering request 190-1:
receiving 810 request 190-1 for object 190 from computer 901, wherein complementary computer 902 was identified as receiver of request 190-1 by computer 901 via digest matrix 141; and
transmitting 820 further copy 190'' of object 190 to cache 921-1 of cache computer 901.

Step 810 corresponds to the part of forwarding step 450 that is performed on complementary computer 902. Step 820 corresponds to the part of step transmitting step 460 that is performed on complementary computer 902.

Referring again to FIG. 8B, CPP 102 optionally causes complementary computer 902 to execute the following further steps for receiving updated information about the content of cache 921-1 of computer 901:
receiving 830 digest matrix 141 from computer 901; and
synchronizing 840 complementary digest matrix 142 of complementary computer 902 with digest matrix 141.

Steps 830, 840 correspond to the part of synchronizing step 480 that is performed on complementary computer 902.

FIG. 8C illustrates further optional steps of CPP 102 that are performed by complementary computer 902 when executing CPP 102. Preferably but not limiting, the steps are performed in the illustrated order. The following steps of CPP 102 prevent complementary computer 902 from transmitting an obsolete copy of requested object 190 to computer 901:
checking 812 complementary cache 922-1 for the validity of further copy 190'';
if further copy 190'' is invalid, identifying 814 further computer 906 as supplier of still further copy 190''' of object 190 by using digest matrix 142 of complementary computer 902; in this case digest matrix 142 indicates that still further copy 190''' is stored in further cache 926-1 of further computer 906;
forwarding 816 request 190-1 for object 190 from complementary computer 902 to further computer 906; and
receiving 818 still further copy 190''' from further cache 926-1 to answer request 190-1.

In case checking step 832 detects invalidity (obsoleteness) of further copy 190'', it is convenient that CPP 102 causes complementary computer 902 to execute the further optional step:
sending 813 message 180 to computer 901, wherein message 180 indicates that request 190-1 cannot immediately be answered by complementary computer 902.

Steps 812, 814 and 816 correspond to steps 552, 554 and 556 of method 500, respectively. Step 818 corresponds to parts of steps 558 and 560 of method 500 that are performed on complementary computer 902.

Step 813 corresponds to responding step 454 of method 400.

The present invention is described as computer system 999 in FIGS. 1, 2, 3 and 7. For convenience of explanation, the description of computer system 999 is summarized again in the following.

Computer system 999 comprising first cache computer 901 and at least second cache computer 902.

First cache computer 901 has:
first cache 921-1 for storing copy 190' of requested object 190; and
first digest matrix 141 for storing identification 141-1 and content digest 141-2 of at least second cache computer 902; first cache computer 901 uses first digest matrix 141 to identify second cache computer 902 as supplier of requested object 190.

First cache computer 901 optionally further comprises:
transformer 170 for transforming request 190-1 for requested object 190 into object representation 190-2 that complies with the format of the at least one content digest 141-2 of first digest matrix 141. First cache computer 901 compares request 190-1 via object representation 190-2 with the at least one content digest 141-2.
First cache computer further comprises journal 111 for tracking the change history of objects over time, wherein a journal entry of journal 111 indicates the modification of an object (e.g. 190) and carries relative time stamp 111-1. The relative time stamp 111-1 of a journal entry that refers to requested object 190 indicates the validity (obsoleteness) of copy 190'.

Second cache computer 902 has:
second cache 922-2 to store at least further copy 190'' of requested object 190. Second cache computer 902 is identified as receiver of request 190-1 by first cache computer 901 via first digest matrix 141; and
second digest matrix 142 for storing identification 142-1 and content digest 142-2 of at least first cache computer 901. Preferably, second digest matrix 142 is synchronized with first digest matrix 141 after first cache computer 901 has stored copy 190' of requested content object 190 in first cache 921-1 and has updated first digest matrix 141, accordingly.

Second cache computer 902 further has:
journal 112 for tracking the change history of objects over time, wherein a journal entry of journal 112 indicates the modification of an object (e.g. 190) and carries a relative time stamp 112-1. The relative time stamp 112-1 of a journal entry (e.g. 112-10) that refers to requested object 190 indicates the validity (obsoleteness) of further copy 190''; and
comparator 160 to check the validity of further copy 190'' by comparing the latest relative time stamp 112-1 for object 190 with a further latest time stamp 111-1 received from first journal 111 of first cache computer (901).

| **Reference** | **Description** |
|---|---|
| 100/101/102 | Computer program products |
| 111, 112 | Journals |
| 111-1, 112-1 | Journal columns with journal key |
| 111-2, 112-2 | Journal columns with object |
| 111-10, 112-10 | Journal entries |
| 141, 142, 146 | Digest Matrices |
| 141-1, 142-1 | Digest matrice columns for C-computer IDs |
| 141-2, 142-2 | Digest matrice columns for content digests |
| 141-12, 141-22 | Content digests |
| 160 | Comparator |
| 170 | Transformer |
| 190-193, 190', 190'', 190''' | Objects |
| 190-1 | Object request |
| 190-2 | Object representation |
| 400, 500 | Methods |
| 4xx, 5xx | Method steps |
| 999 | Computer system |
| 900-909 | Computers |
| 910, 911, 912 | Processors |
| 920, 921, 922 | Memories |
| 921-1, 922-1, 926-1 | Caches |
| 930 | Bus |
| 940 | Input device |
| 950 | Output device |
| 951 | Cursor |
| 960 | User interface |
| 970 | Program carrier (computer readable device) |
| 980 | Program signal |
| 990 | Computer network |
| 990-1 to 990-9 | Computer network branches |

## Claims

1. A computer-implemented method carried out by a network (990) comprising a plurality of cache computers (902, 905, 906),
wherein each of the cache computers (902, 905, 906) comprises a cache (922-1, 925-1, 926-1) storing copies of objects stored on origin computers (903, 904, 907, 908, 909);
wherein each of the cache computers (902, 905, 906) comprises a digest matrix (142, 145; 146) comprising the identification and content digest of each of the plurality of cache computers (902, 905, 906), said content digest comprising a representation of the objects (190, 191) that are stored in the cache of the corresponding cache computer;
wherein each of the cache computers (902, 905, 906) comprises a journal (112) tracking the change history of objects over time and containing journal entries (112-10), each journal entry indicating the modification of an object referring to an origin computer and comprising an identifier of the origin computer, the identifier of the modified object and a relative time stamp,
the relative time stamp being a strictly increasing or strictly decreasing sequence number, wherein a journal entry with a higher absolute value of the time stamp for a specific origin computer and for a specific object was generated later than a journal entry with a lower absolute value of the time stamp for said specific origin computer and for said specific object; and
a plurality of origin computers (903, 904, 907, 908, 909) storing objects (190, 191),
journal entries being generated on origin computers when original objects are modified;
new journal entries being transmitted from an origin computer to a corresponding cache computer at predefined time intervals;
receiving (810) from a first computer on a second computer of said cache computers (902, 905, 906) a request (190-1) for a cached object (190) with the identifier of the origin computer of the object and with a relative time stamp;
checking (552, 812) for the validity of the copy of the requested object stored in the cache of said second computer by comparing the latest relative time stamp for the object in the journal of the second computer with the received relative time stamp; the copy being valid if the latest relative time stamp was generated later than the received time stamp;
if the copy stored in the cache of said second computer is valid answering said request with said copy;
if the copy stored in the cache of said second computer is invalid, performing the following steps (a), (b), (c) and (d):
(a) deleting invalid copies of the object from the cache of the second computer;
(b) identifying (554, 814) whether a third computer of said cache computers (902, 905, 906) is supplier of a copy of the object by using the digest matrix stored on the second computer,
(c) if the digest matrix of the second computer indicates that a copy of the object is stored in the cache of the third computer, performing the steps of:
forwarding (556, 816) the request for the object of said origin computer with said relative time stamp from the second computer to the third computer;
checking for the validity of the copy of the object stored in the cache of the third computer by comparing the latest relative time stamp for the object in the journal of the third cache computer with the received relative time stamp; the copy being valid if the latest relative time stamp was generated later than the received time stamp;
if the copy stored in the cache of the third computer is valid, performing the steps of
transmitting (558) the copy from the cache of the third computer to answer said request;
replacing (560) on the second computer the copy stored in the cache of the second computer with the copy received from the third computer;
updating (470, 580, 780) said digest matrix of the second computer according to the updated cache of the second computer;
synchronizing (480, 590, 840) the digest matrix stored in the third computer with the updated digest matrix of the second computer; and
(d) if no cached copy can be found in the cache computers (902, 905, 906), the second computer retrieves the original object directly from the corresponding origin computer, answers said request, stores a copy of said retrieved object in its cache and updates its digest matrix according to its updated cache.

2. The method (400, 500) of claim 1, comprising the further steps:
responding (454) to the request from the first computer with a message (180), if the copy stored in the cache of the second computer is invalid.

3. A computer program product having a plurality of instructions for causing a processor of a computer to execute steps of the computer-implemented method according to any one of the preceding claims.

4. A computer system (999) comprising
a plurality of cache computers (902, 905, 906),
wherein each of the cache computers (902, 905, 906) comprises a cache (922-1, 925-1, 926-1) storing copies of objects stored on origin computers (903, 904, 907, 908, 909),
wherein each of the cache computers (902, 905, 906) comprises a digest matrix (142, 145, 146) comprising the identification and content digest of each of the plurality of cache computers, said content digest comprising a representation of the objects that are stored in the cache of the corresponding cache computer;
wherein each of the cache computers (902, 905, 906) comprises a journal (112) tracking the change history of objects over time and containing journal entries (112-10), each journal entry indicating the modification of an object referring to an origin computer and comprising an identifier of the origin computer, the identifier of the modified object and a relative time stamp,
the time stamp being a strictly increasing or strictly decreasing sequence number, wherein a journal entry with a higher absolute value of the time stamp for a specific origin computer and for a specific object was generated later than a journal entry with a lower absolute value of the time stamp for said specific origin computer and for said specific object; and
a plurality of origin computers (903, 904, 907, 908, 909) storing objects (190, 191); each of the origin computer comprising means for
generating journal entries when original objects are modified;
transmitting new journal entries from the origin computer to a corresponding cache computer at predefined time intervals;
wherein a second computer of said plurality of cache computers (902, 905, 906) has further means for:
receiving from a first computer of said cache computers a request (190-1) for a cached object (190) with the identifier of the origin computer of the object and with a relative time stamp;
checking for the validity of the copy of the requested object stored in the cache of said second computer by comparing the latest relative time stamp for the object in the journal of the second computer with the received time stamp;
if the copy stored in the cache of said second computer is valid answering said request with said copy;
if the copy stored in the cache of said second computer is invalid, performing the following steps (a), (b), (c) and (d):
(a) deleting invalid copies of the object from the cache of the second computer;
(b) identifying (554) whether a third computer of said plurality of cache computers (902, 905, 906) is supplier of a copy of the object by using the digest matrix stored on the second computer,
(c) if the digest matrix of the second computer indicates that a copy of the object is stored in a cache of a third computer, performing the steps of:
forwarding (556) the request for the object of said origin computer with the relative time stamp from the second computer to the third computer;
if the copy stored in the cache of the third computer is valid, receiving the copy from the third computer to answer the request;
replacing (560) on the second computer the copy stored in the cache of the second computer with the value of the copy received from the third computer;
updating (470, 580, 780) the digest matrix of the second computer according to the updated cache of the second computer; and
sending the updated digest matrix to the third computer in order for the third computer to synchronize (480, 590, 840) a digest matrix stored in the third computer with the updated digest matrix of the second computer; and
(d) if no cached copy can be found in the cache computers (902, 905, 906), the second computer retrieving the original object directly from the corresponding origin computer, answering said request, storing a copy of said retrieved object in its cache and updating its digest matrix according to its updated cache; and
wherein said third computer further comprises means for
checking for the validity of the copy of the object stored in the cache of the third computer by comparing the latest relative time stamp for the object in the journal of the third computer with the received relative time stamp, the copy being valid if the latest relative time stamp was generated later than the received time stamp; and
if the copy stored in the cache of the third computer is valid, transmitting the copy from the cache of the third computer to the second computer.

5. The computer system (999) of claim 4, wherein the second computer has further means for:
sending (454, 813) a message (180) to the first computer, if the copy stored in the cache of the second computer is invalid.

6. A cache computer (902; 905; 906) having
a cache (922-1, 925-1, 926-1) that stores copies of objects (190, 191) stored on origin computers (903, 904, 907, 908, 909),
a digest matrix (142; 145; 146) comprising the identification and content digest of each of a plurality of cache computers (902, 905, 906) in a network;
a journal (112) tracking the change history of objects over time and containing journal entries (112-10), each journal entry indicating the modification of an object referring to an origin computer and comprising an identifier of the origin computer, the identifier of the modified object and a relative time stamp,
the relative time stamp being a strictly increasing or strictly decreasing sequence number, wherein a journal entry with a higher absolute value of the time stamp for a specific origin computer and for a specific object was generated later than a journal entry with a lower absolute value of the time stamp for said specific origin computer and for said specific object;
the cache computer (902; 905; 906) having further means for:
receiving new journal entries from an origin computer of a plurality of origin computers (903, 904, 907, 908, 909) storing objects at predefined time intervals, wherein journal entries are being generated on the origin computers when original objects are modified;
receiving (810) from another cache computer a request (190-1) for a cached object (190) with the identifier of origin computer of the object and with a relative time stamp,
checking (552, 812) for the validity of the copy of the requested object stored in the cache of the cache computer by comparing the latest relative time stamp for the object in the journal of the cache computer with the received relative time stamp; the copy being valid if the latest relative time stamp was generated later than the received time stamp;
if the copy stored in the cache of the cache computer is valid answering said request with said copy;
if the copy stored in the cache of the cache computer is invalid, performing the following steps (a), (b), (c) and (d):
(a) deleting invalid copies of the object from the cache;
(b) identifying (554, 814) whether a third cache computer is supplier of a copy of the object by using a digest matrix stored on the cache computer;
(c) if the digest matrix of the cache computer indicates that a copy of the object is stored in the cache of a third cache computer, performing the steps of:
forwarding (556, 816) the request for the object of said origin computer with said relative time stamp from the cache computer to the third computer; and
receiving (818) the copy from the third cache to answer the request if the copy stored in the cache of the third cache computer is valid, wherein the third cache computer checks for the validity of the copy of the object stored in the cache of the third cache computer by comparing the latest relative time stamp for the object in the journal of the third cache computer with the received relative time stamp; the copy being valid if the latest relative time stamp was generated later than the received time stamp;
replacing (560) on the cache computer the copy stored in the cache of the cache computer with the copy received from the third cache computer ;
updating (470; 580; 780) the digest matrix of the cache computer according to the updated cache;
sending (790) the updated digest matrix to the third cache computer in order for the third computer to synchronize (480; 590; 840) a digest matrix stored in the third computer with the updated digest matrix of the cache computer; and
(d) if no cached copy can be found in the cache computers, the cache computer retrieving the original object directly from the corresponding origin computer, answering said request, storing a copy of said retrieved object in its cache and updating its digest matrix according to its updated cache.

7. The cache computer (902; 905; 906) of claim 6, having further means for:
sending (813) a message to the other cache computer, if the copy stored the cache is invalid.

8. A data carrier readable by a computer, the data carrier storing a plurality of instructions of a computer program product to execute the steps of the computer program product according to claim 3.

## Patentansprüche

1. Computerimplementiertes Verfahren, das von einem Netzwerk (990) ausgeführt wird, das eine Mehrzahl von Cache-Computern (902, 905, 906) umfasst,
wobei jeder der Cache-Computer (902, 905, 906) einen Cache (922-1, 925-1, 926-1) umfasst, der Kopien von Objekten speichert, die auf Ursprungscomputern (903, 904, 907, 908, 909) gespeichert sind;
wobei jeder der Cache-Computer (902, 905, 906) eine Digest- bzw. Übersichtsmatrix (142, 145; 146) umfasst, welche die Identifikation und Inhaltsübersicht jedes der Mehrzahl von Cache-Computern (902, 905, 906) umfasst, wobei die Inhaltsübersicht eine Darstellung der Objekte (190, 191) umfasst, die in dem Cache des entsprechenden Cache-Computers gespeichert sind;
wobei jeder der Cache-Computer (902, 905, 906) ein Journal (112) umfasst, das den Änderungsverlauf von Objekten mit der Zeit verfolgt und Journaleinträge (112-10) enthält, wobei jeder Journaleintrag die Modifikation eines Objekts angibt, das einen Ursprungscomputer betrifft, und einen Identifizierer des Ursprungscomputers, den Identifizierer des modifizierten Objekts und eine relativen Zeitstempel umfasst,
wobei der relative Zeitstempel eine strikt zunehmende oder strikt abnehmende Sequenzzahl ist, wobei ein Journaleintrag mit einem höheren absoluten Wert des Zeitstempels für einen spezifischen Ursprungscomputer und für ein spezifisches Objekt später generiert wurde als ein Journaleintrag mit einem niedrigen absoluten Wert des Zeitstempels für den spezifischen Ursprungscomputer und für das spezifische Objekt; und
eine Mehrzahl von Ursprungscomputern (903, 904, 907, 908, 909), die Objekte (190, 191) speichern,
wobei Journaleinträge auf Ursprungscomputern generiert werden, wenn Originalobjekte modifiziert werden;
neue Journaleinträge von einem Ursprungscomputer an einen entsprechenden Cache-Computer mit vordefinierten Zeitintervallen übertragen werden;
Empfangen (810), von einem ersten Computer auf einem zweiten Computer der Cache-Computer (902, 905, 906), einer Anforderung (190-1) nach einem gecacheden bzw. zwischengespeicherten Objekt (190) mit dem Identifizierer des Ursprungscomputers des Objekts und mit einem relativen Zeitstempel;
Überprüfen (552, 812) der Gültigkeit der Kopie des angeforderten Objekts, das in dem Cache des zweiten Computers gespeichert ist, durch Vergleichen des aktuellsten relativen Zeitstempels für das Objekt in dem Journal des zweiten Computers mit dem empfangenen relativen Zeitstempel; wobei die Kopie gültig ist, wenn der aktuellste relative Zeitstempel später generiert wurde als der empfangene Zeitstempel;
wenn die in dem Cache des zweiten Computers gespeicherte Kopie gültig ist, Beantworten der Anforderung mit der Kopie;
wenn die in dem Cache des zweiten Computers gespeicherte Kopie ungültig ist, Durchführen der folgenden Schritte (a), (b), (c) und (d):
(a) Löschen von ungültigen Kopien des Objekts aus dem Cache des zweiten Computers;
(b) Identifizieren (554, 814), ob ein dritter Computer der Cache-Computer (902, 905, 906) Lieferant bzw. Bereitsteller einer Kopie des Objekts ist, unter Verwendung der Übersichtsmatrix, die auf dem zweiten Computer gespeichert ist;
(c) wenn die Übersichtsmatrix des zweiten Computers angibt, dass eine Kopie des Objekts in dem Cache des dritten Computers gespeichert ist, durchführen der Schritte:
Weiterleiten (556, 816) der Anforderung nach dem Objekt des Ursprungscomputers mit dem relativen Zeitstempel von dem zweiten Computer an den dritten Computer;
Überprüfen der Gültigkeit der Kopie des Objekts, das in dem Cache des dritten Computers gespeichert ist, durch Vergleichen des aktuellsten relativen Zeitstempels für das Objekt in dem Journal des dritten Cache-Computers mit dem empfangenen relativen Zeitstempel; wobei die Kopie gültig ist, wenn der aktuellste relative Zeitstempel später generiert wurde als der empfangene Zeitstempel;
wenn die in dem Cache des dritten Computers gespeicherte Kopie gültig ist, Durchführen der Schritte:
Übertragen (558) der Kopie von dem Cache des dritten Computers zum Beantworten der Anfrage;
Ersetzen (560), auf dem zweiten Computer, der in dem Cache des zweiten Computers gespeicherten Kopie mit der von dem dritten Computer empfangenen Kopie;
Aktualisieren (470, 580, 780) der Übersichtsmatrix des zweiten Computers gemäß dem aktualisierten Cache des zweiten Computers;
Synchronisieren (480, 590, 840) der in dem dritten Computer gespeicherten Übersichtsmatrix mit der aktualisierten Übersichtsmatrix des zweiten Computers; und
(d) wenn keine gecachede bzw. zwischengespeicherte Kopie in den Cache-Computern (902, 905, 906) gefunden werden kann, ruft der zweite Computer das Originalobjekt direkt von dem entsprechenden Ursprungscomputer ab bzw. findet dieses wieder auf, beantwortet die Anfrage, speichert eine Kopie des abgerufenen bzw. wieder aufgefundenen Objekts in seinem Cache und aktualisiert seine Übersichtsmatrix gemäß seinem aktualisierten Cache.

2. Verfahren (400, 500) nach Anspruch 1, ferner umfassend die Schritte:
Antworten (454) auf die Anfrage von dem ersten Computer mit einer Nachricht (180), wenn die in dem Cache des zweiten Computers gespeicherte Kopie ungültig ist.

3. Computerprogrammprodukt, aufweisend eine Mehrzahl von Instruktionen zum Veranlassen eines Prozessors eines Computers, Schritte des computerimplementierten Verfahrens gemäß einem der vorhergehenden Ansprüche auszuführen.

4. Computersystem (999), umfassend
eine Mehrzahl von Cache-Computern (902, 905, 906),
wobei jeder der Cache-Computer (902, 905, 906) einen Cache (922-1, 925-1, 926-1) umfasst, der Kopien von Objekten speichert, die auf Ursprungscomputern (903, 904, 907, 908, 909) gespeichert sind;
wobei jeder der Cache-Computer (902, 905, 906) eine Digest- bzw. Übersichtsmatrix (142, 145; 146) umfasst, welche die Identifikation und Inhaltsübersicht jedes der Mehrzahl von Cache-Computern umfasst, wobei die Inhaltsübersicht eine Darstellung der Objekte umfasst, die in dem Cache des entsprechenden Cache-Computers gespeichert sind;
wobei jeder der Cache-Computer (902, 905, 906) ein Journal (112) umfasst,
das den Änderungsverlauf von Objekten mit der Zeit verfolgt und Journaleinträge (112-10) enthält, wobei jeder Journaleintrag die Modifikation eines Objekts angibt, das einen Ursprungscomputer betrifft, und einen Identifizierer des Ursprungscomputers, den Identifizierer des modifizierten Objekts und eine relativen Zeitstempel umfasst,
wobei der Zeitstempel eine strikt zunehmende oder strikt abnehmende Sequenzzahl ist, wobei ein Journaleintrag mit einem höheren absoluten Wert des Zeitstempels für einen spezifischen Ursprungscomputer und für ein spezifisches Objekt später generiert wurde als ein Journaleintrag mit einem niedrigen absoluten Wert des Zeitstempels für den spezifischen Ursprungscomputer und für das spezifische Objekt; und
eine Mehrzahl von Ursprungscomputern (903, 904, 907, 908, 909), die Objekte (190, 191) speichern, wobei jeder der Ursprungscomputer Mittel umfasst zum
Generieren von Journaleinträgen, wenn Originalobjekte modifiziert werden; Übertragen von neuen Journaleinträgen von dem Ursprungscomputer an einen entsprechenden Cache-Computer mit vordefinierten Zeitintervallen;
wobei ein zweiter Computer der Mehrzahl von Cache-Computern (902, 905, 906) ferner Mittel aufweist zum:
Empfangen, von einem ersten Computer der Cache-Computer, einer Anforderung (190-1) nach einem gecacheden bzw. zwischengespeicherten Objekt (190) mit dem Identifizierer des Ursprungscomputers des Objekts und mit einem relativen Zeitstempel;
Überprüfen der Gültigkeit der Kopie des angeforderten Objekts, das in dem Cache des zweiten Computers gespeichert ist, durch Vergleichen des aktuellsten relativen Zeitstempels für das Objekt in dem Journal des zweiten Computers mit dem empfangenen relativen Zeitstempel;
wenn die in dem Cache des zweiten Computers gespeicherte Kopie gültig ist, Beantworten der Anforderung mit der Kopie;
wenn die in dem Cache des zweiten Computers gespeicherte Kopie ungültig ist, Durchführen der folgenden Schritte (a), (b), (c) und (d):
(a) Löschen von ungültigen Kopien des Objekts aus dem Cache des zweiten Computers;
(b) Identifizieren (554), ob ein dritter Computer der Mehrzahl von Cache-Computern (902, 905, 906) Lieferant bzw. Bereitsteller einer Kopie des Objekts ist, unter Verwendung der Übersichtsmatrix, die auf dem zweiten Computer gespeichert ist;
(c) wenn die Übersichtsmatrix des zweiten Computers angibt, dass eine Kopie des Objekts in dem Cache des dritten Computers gespeichert ist, durchführen der Schritte:
Weiterleiten (556) der Anforderung nach dem Objekt des Ursprungscomputers mit dem relativen Zeitstempel von dem zweiten Computer an den dritten Computer;
wenn die in dem Cache des dritten Computers gespeicherte Kopie gültig ist, Empfangen der Kopie von dem dritten Computer zum Beantworten der Anfrage;
Ersetzen (560), auf dem zweiten Computer, der in dem Cache des zweiten Computers gespeicherten Kopie mit dem Wert der von dem dritten Computer empfangenen Kopie;
Aktualisieren (470, 580, 780) der Übersichtsmatrix des zweiten Computers gemäß dem aktualisierten Cache des zweiten Computers; und
Senden der aktualisierten Übersichtsmatrix an den dritten Computer, damit der dritte Computer eine in dem dritten Computer gespeicherte Übersichtsmatrix mit der aktualisierten Übersichtsmatrix des zweiten Computers synchronisiert (480, 590, 840); und
(d) wenn keine gecachede bzw. zwischengespeicherte Kopie in den Cache-Computern (902, 905, 906) gefunden werden kann, ruft der zweite Computer das Originalobjekt direkt von dem entsprechenden Ursprungscomputer ab bzw. findet dieses wieder auf, beantwortet die Anfrage, speichert eine Kopie des abgerufenen bzw. wieder aufgefundenen Objekts in seinem Cache und aktualisiert seine Übersichtsmatrix gemäß seinem aktualisierten Cache; und
wobei der dritte Computer ferner Mittel umfasst zum:
Überprüfen der Gültigkeit der Kopie des Objekts, das in dem Cache des dritten Computers gespeichert ist, durch Vergleichen des aktuellsten relativen Zeitstempels für das Objekt in dem Journal des dritten Computers mit dem empfangenen relativen Zeitstempel, wobei die Kopie gültig ist, wenn der aktuellste relative Zeitstempel später generiert wurde als der empfangene Zeitstempel; und
wenn die in dem Cache des dritten Computers gespeicherte Kopie gültig ist, Übertragen der Kopie von dem Cache des dritten Computers zu dem zweiten Computer.

5. Computersystem (999) nach Anspruch 4, wobei der zweite Computer ferner Mittel umfasst zum:
Senden (454, 813) einer Nachricht (180) an den ersten Computer, wenn die in dem Cache des zweiten Computers gespeicherte Kopie ungültig ist.

6. Cache-Computer (902; 905; 906), aufweisend:
einen Cache (922-1, 925-1, 926-1), der Kopien von Objekten (190, 191) speichert, die auf Ursprungscomputern (903, 904, 907, 908, 909) gespeichert sind,
eine Digest- bzw. Übersichtsmatrix (142, 145; 146), welche die Identifikation und Inhaltsübersicht jedes der Mehrzahl von Cache-Computern (902, 905, 906) in einem Netzwerk umfasst;
ein Journal (112), das den Änderungsverlauf von Objekten mit der Zeit verfolgt und Journaleinträge (112-10) enthält, wobei jeder Journaleintrag die Modifikation eines Objekts angibt, das einen Ursprungscomputer betrifft, und einen Identifizierer des Ursprungscomputers, den Identifizierer des modifizierten Objekts und eine relativen Zeitstempel umfasst,
wobei der relative Zeitstempel eine strikt zunehmende oder strikt abnehmende Sequenzzahl ist, wobei ein Journaleintrag mit einem höheren absoluten Wert des Zeitstempels für einen spezifischen Ursprungscomputer und für ein spezifisches Objekt später generiert wurde als ein Journaleintrag mit einem niedrigen absoluten Wert des Zeitstempels für den spezifischen Ursprungscomputer und für das spezifische Objekt;
wobei der Cache-Computer (902; 905; 906) ferner Mittel aufweist zum:
Empfangen von neuen Journaleinträgen von einem Ursprungscomputer einer Mehrzahl von Ursprungscomputern (903, 904, 907, 908, 909), die Objekte mit vordefinierten Zeitintervallen speichern, wobei Journaleinträge auf Ursprungscomputern generiert werden, wenn Originalobjekte modifiziert werden;
Empfangen (810), von einem anderen Cache-Computer, einer Anforderung (190-1) nach einem gecacheden bzw. zwischengespeicherten Objekt (190) mit dem Identifizierer des Ursprungscomputers des Objekts und mit einem relativen Zeitstempel,
Überprüfen (552, 812) der Gültigkeit der Kopie des angeforderten Objekts, das in dem Cache des Cache-Computers gespeichert ist, durch Vergleichen des aktuellsten relativen Zeitstempels für das Objekt in dem Journal des Cache-Computers mit dem empfangenen relativen Zeitstempel; wobei die Kopie gültig ist, wenn der aktuellste relative Zeitstempel später generiert wurde als der empfangene Zeitstempel;
wenn die in dem Cache des Cache-Computers gespeicherte Kopie gültig ist, Beantworten der Anforderung mit der Kopie;
wenn die in dem Cache des Cache-Computers gespeicherte Kopie ungültig ist, Durchführen der folgenden Schritte (a), (b), (c) und (d):
(a) Löschen von ungültigen Kopien des Objekts aus dem Cache;
(b) Identifizieren (554, 814), ob ein dritter Cache-Computer Lieferant bzw. Bereitsteller einer Kopie des Objekts ist, unter Verwendung einer Übersichtsmatrix, die auf dem Cache-Computer gespeichert ist;
(c) wenn die Übersichtsmatrix des Cache-Computers angibt, dass eine Kopie des Objekts in dem Cache des dritten Cache-Computers gespeichert ist, durchführen der Schritte:
Weiterleiten (556, 816) der Anforderung nach dem Objekt des Ursprungscomputers mit dem relativen Zeitstempel von dem Cache-Computer an den dritten Computer; und
Empfangen (818) der Kopie von dem dritten Cache zum Beantworten der Anforderung, wenn die in dem Cache des dritten Cache-Computers gespeicherte Kopie gültig ist, wobei der dritte Cache-Computer die Gültigkeit der Kopie des Objekts überprüft, das in dem Cache des dritten Computers gespeichert ist, und zwar durch Vergleichen des aktuellsten relativen Zeitstempels für das Objekt in dem Journal des dritten Cache-Computers mit dem empfangenen relativen Zeitstempel; wobei die Kopie gültig ist, wenn der aktuellste relative Zeitstempel später generiert wurde als der empfangene Zeitstempel;
Ersetzen (560), auf dem Cache-Computer, der in dem Cache des Cache-Computers gespeicherten Kopie mit der von dem dritten Cache-Computer empfangenen Kopie;
Aktualisieren (470; 580; 780) der Übersichtsmatrix des Cache-Computers gemäß dem aktualisierten Cache;
Senden (790) der aktualisierten Übersichtsmatrix an den dritten Cache-Computer, damit der dritte Computer eine in dem dritten Computer gespeicherte Übersichtsmatrix mit der aktualisierten Übersichtsmatrix des Cache-Computers synchronisiert (480; 590; 840); und
(d) wenn keine gecachede bzw. zwischengespeicherte Kopie in den Cache-Computern gefunden werden kann, ruft der Cache-Computer das Originalobjekt direkt von dem entsprechenden Ursprungscomputer ab bzw. findet dieses wieder auf, beantwortet die Anfrage, speichert eine Kopie des abgerufenen bzw. wieder aufgefundenen Objekts in seinem Cache und aktualisiert seine Übersichtsmatrix gemäß seinem aktualisierten Cache.

7. Cache-Computer (902; 905; 906) nach Anspruch 6, ferner aufweisend Mittel zum:
Senden (813) einer Nachricht an den anderen Cache-Computer, wenn die in dem Cache gespeicherte Kopie ungültig ist.

8. Datenträger, der von einem Computer lesbar ist, wobei der Datenträger eine Mehrzahl von Instruktionen eines Computerprogrammprodukts zum Ausführen der Schritte des Computerprogrammprodukts gemäß Anspruch 3 speichert.

## Revendications

1. Procédé mis en oeuvre par ordinateur effectué par un réseau (990) comprenant une pluralité d'ordinateurs cache (902, 905, 906),
dans lequel chacun des ordinateurs cache (902, 905, 906) comprend un cache (922-1, 925-1, 926-1) stockant des copies d'objets stockés sur des ordinateurs d'origine (903, 904, 907, 908, 909) ;
dans lequel chacun des ordinateurs cache (902, 905, 906) comprend une matrice de prétraitement (142, 145 ; 146) comprenant l'identification et le prétraitement de contenu de chacun de la pluralité d'ordinateurs cache (902, 905, 906), ledit prétraitement de contenu comprenant une représentation des objets (190, 191) qui sont stockés dans le cache de l'ordinateur cache correspondant ;
dans lequel chacun des ordinateurs cache (902, 905, 906) comprend un journal (112) traçant l'historique de changement d'objets dans le temps et contenant des entrées de journal (112-10), chaque entrée de journal indiquant la modification d'un objet faisant référence à un ordinateur d'origine et comprenant un identifiant de l'ordinateur d'origine, l'identifiant de l'objet modifié et une estampille temporelle relative,
l'estampille temporelle relative étant un nombre séquentiel augmentant strictement ou diminuant strictement, dans lequel une entrée de journal avec une valeur absolue supérieure de l'estampille temporelle pour un ordinateur d'origine spécifique et pour un objet spécifique a été générée plus tard qu'une entrée de journal avec une valeur absolue inférieure de l'estampille temporelle pour ledit ordinateur d'origine spécifique et pour ledit objet spécifique ; et
une pluralité d'ordinateurs d'origine (903, 904, 907, 908, 909) stockant des objets (190, 191),
des entrées de journal étant générées sur des ordinateurs d'origine lorsque des objets d'origine sont modifiés ;
de nouvelles entrées de journal étant transmises d'un ordinateur d'origine à un ordinateur cache correspondant à des intervalles de temps prédéfinis ;
recevoir (810) d'un premier ordinateur sur un deuxième ordinateur desdits ordinateurs cache (902, 905, 906) une demande (190-1) pour un objet en cache (190) avec l'identifiant de l'ordinateur d'origine de l'objet et avec une estampille temporelle relative ;
vérifier (552, 812) la validité de la copie de l'objet demandé stocké dans le cache dudit deuxième ordinateur en comparant l'estampille temporelle relative la plus récente pour l'objet dans le journal du deuxième ordinateur avec l'estampille temporelle relative reçue ; la copie étant valide si l'estampille temporelle relative la plus récente a été générée plus tard que l'estampille temporelle reçue ;
si la copie stockée dans le cache dudit deuxième ordinateur est valide, répondre à ladite demande avec ladite copie ;
si la copie stockée dans le cache dudit deuxième ordinateur est invalide, réaliser les étapes suivantes (a), (b), (c) et (d) :
(a) effacer des copies invalides de l'objet du cache du deuxième ordinateur ;
(b) identifier (554, 814) si un troisième ordinateur desdits ordinateurs cache (902, 905, 906) est fournisseur d'une copie de l'objet en utilisant la matrice de prétraitement stockée sur le deuxième ordinateur,
(c) si la matrice de prétraitement du deuxième ordinateur indique qu'une copie de l'objet est stockée dans le cache du troisième ordinateur, réaliser les étapes consistant à :
transférer (556, 816) la demande pour l'objet dudit ordinateur d'origine avec ladite estampille temporelle relative du deuxième ordinateur au troisième ordinateur ;
vérifier la validité de la copie de l'objet stocké dans le cache du troisième ordinateur en comparant l'estampille temporelle relative la plus récente pour l'objet dans le journal du troisième ordinateur cache avec l'estampille temporelle relative reçue ; la copie étant valide si l'estampille temporelle relative la plus récente a été générée plus tard que l'estampille temporelle reçue ;
si la copie stockée dans le cache du troisième ordinateur est valide, réaliser les étapes consistant à
transmettre (558) la copie du cache du troisième ordinateur pour répondre à ladite demande ;
remplacer (560) sur le deuxième ordinateur la copie stockée dans le cache du deuxième ordinateur par la copie reçue du troisième ordinateur ;
mettre à jour (470, 580, 780) ladite matrice de prétraitement du deuxième ordinateur en fonction du cache mis à jour du deuxième ordinateur ;
synchroniser (480, 590, 840) la matrice de prétraitement stockée dans le troisième ordinateur avec la matrice de prétraitement mise à jour du deuxième ordinateur ; et
(d) si aucune copie en cache ne peut être trouvée dans les ordinateurs cache (902, 905, 906), le deuxième ordinateur récupère l'objet d'origine directement de l'ordinateur d'origine correspondant, répond à ladite demande, stocke une copie dudit objet récupéré dans son cache et met à jour sa matrice de prétraitement en fonction de son cache mis à jour.

2. Procédé (400, 500) selon la revendication 1, comprenant les étapes supplémentaires :
répondre (454) à la demande du premier ordinateur avec un message (180) si la copie stockée dans le cache du deuxième ordinateur est invalide.

3. Produit de programme informatique ayant une pluralité d'instructions pour pousser un processeur d'un ordinateur à exécuter des étapes du procédé mis en oeuvre par ordinateur selon l'une quelconque des revendications précédentes.

4. Système informatique (999) comprenant
une pluralité d'ordinateurs cache (902, 905, 906),
dans lequel chacun des ordinateurs cache (902, 905, 906) comprend un cache (922-1, 925-1, 926-1) stockant des copies d'objets stockés sur des ordinateurs d'origine (903, 904, 907, 908, 909),
dans lequel chacun des ordinateurs cache (902, 905, 906) comprend une matrice de prétraitement (142, 145, 146) comprenant l'identification et le prétraitement de contenu de chacun de la pluralité d'ordinateurs cache, ledit prétraitement de contenu comprenant une représentation des objets qui sont stockés dans le cache de l'ordinateur cache correspondant ;
dans lequel chacun des ordinateurs cache (902, 905, 906) comprend un journal (112) traçant l'historique de changement d'objets dans le temps et contenant des entrées de journal (112-10), chaque entrée de journal indiquant la modification d'un objet faisant référence à un ordinateur d'origine et comprenant un identifiant de l'ordinateur d'origine, l'identifiant de l'objet modifié et une estampille temporelle relative,
l'estampille temporelle relative étant un nombre séquentiel augmentant strictement ou diminuant strictement, dans lequel une entrée de journal avec une valeur absolue supérieure de l'estampille temporelle pour un ordinateur d'origine spécifique et pour un objet spécifique a été générée plus tard qu'une entrée de journal avec une valeur absolue inférieure de l'estampille temporelle pour ledit ordinateur d'origine spécifique et pour ledit objet spécifique ; et
une pluralité d'ordinateurs d'origine (903, 904, 907, 908, 909) stockant des objets (190, 191) ; chacun des ordinateurs d'origine comprenant un moyen pour générer des entrées de journal lorsque des objets d'origine sont modifiés ; transmettre de nouvelles entrées de journal de l'ordinateur d'origine à un ordinateur cache correspondant à des intervalles de temps prédéfinis ;
dans lequel un deuxième ordinateur de ladite pluralité d'ordinateurs cache (902, 905, 906) a en outre un moyen pour :
recevoir d'un premier ordinateur desdits ordinateurs cache une demande (190-1) pour un objet en cache (190) avec l'identifiant de l'ordinateur d'origine de l'objet et avec une estampille temporelle relative ;
vérifier la validité de la copie de l'objet demandé stocké dans le cache dudit deuxième ordinateur en comparant l'estampille temporelle relative la plus récente pour l'objet dans le journal du deuxième ordinateur avec l'estampille temporelle relative reçue ;
si la copie stockée dans le cache dudit deuxième ordinateur est valide, répondre à ladite demande avec ladite copie ;
si la copie stockée dans le cache dudit deuxième ordinateur est invalide, réaliser les étapes suivantes (a), (b), (c) et (d) :
(a) effacer des copies invalides de l'objet du cache du deuxième ordinateur ;
(b) identifier (554) si un troisième ordinateur de ladite pluralité d'ordinateurs cache (902, 905, 906) est fournisseur d'une copie de l'objet en utilisant la matrice de prétraitement stockée sur le deuxième ordinateur,
(c) si la matrice de prétraitement du deuxième ordinateur indique qu'une copie de l'objet est stockée dans le cache d'un troisième ordinateur, réaliser les étapes consistant à :
transférer (556) la demande pour l'objet dudit ordinateur d'origine avec l'estampille temporelle relative du deuxième ordinateur au troisième ordinateur ;
si la copie stockée dans le cache du troisième ordinateur est valide, recevoir la copie du troisième ordinateur pour répondre à la demande ;
remplacer (560) sur le deuxième ordinateur la copie stockée dans le cache du deuxième ordinateur par la valeur de la copie reçue du troisième ordinateur ;
mettre à jour (470, 580, 780) la matrice de prétraitement du deuxième ordinateur en fonction du cache mis à jour du deuxième ordinateur ; et
envoyer la matrice de prétraitement mise à jour au troisième ordinateur afin que le troisième ordinateur synchronise (480, 590, 840) une matrice de prétraitement stockée dans le troisième ordinateur avec la matrice de prétraitement mise à jour du deuxième ordinateur ; et
(d) si aucune copie en cache ne peut être trouvée dans les ordinateurs cache (902, 905, 906), le deuxième ordinateur récupérant l'objet d'origine directement de l'ordinateur d'origine correspondant, répondant à ladite demande, stockant une copie dudit objet récupéré dans son cache et mettant à jour sa matrice de prétraitement en fonction de son cache mis à jour ; et
dans lequel ledit troisième ordinateur comprend en outre un moyen pour vérifier la validité de la copie de l'objet stocké dans le cache du troisième ordinateur en comparant l'estampille temporelle relative la plus récente pour l'objet dans le journal du troisième ordinateur avec l'estampille temporelle relative reçue, la copie étant valide si l'estampille temporelle relative la plus récente a été générée plus tard que l'estampille temporelle reçue ; et
si la copie stockée dans le cache du troisième ordinateur est valide, transmettre la copie du cache du troisième ordinateur au deuxième ordinateur.

5. Système informatique (999) selon la revendication 4, dans lequel le deuxième ordinateur a en outre un moyen pour :
envoyer (454, 813) un message (180) au premier ordinateur si la copie stockée dans le cache du deuxième ordinateur est invalide.

6. Ordinateur cache (902 ; 905 ; 906) ayant
un cache (922-1, 925-1, 926-1) qui stocke des copies d'objets (190, 191) stockés sur des ordinateurs d'origine (903, 904, 907, 908, 909),
une matrice de prétraitement (142 ; 145 ; 146) comprenant l'identification et le prétraitement de contenu de chacun d'une pluralité d'ordinateurs cache (902, 905, 906) dans un réseau ;
un journal (112) traçant l'historique de changement d'objets dans le temps et contenant des entrées de journal (112-10), chaque entrée de journal indiquant la modification d'un objet faisant référence à un ordinateur d'origine et comprenant un identifiant de l'ordinateur d'origine, l'identifiant de l'objet modifié et une estampille temporelle relative,
l'estampille temporelle relative étant un nombre séquentiel augmentant strictement ou diminuant strictement, dans lequel une entrée de journal avec une valeur absolue supérieure de l'estampille temporelle pour un ordinateur d'origine spécifique et pour un objet spécifique a été générée plus tard qu'une entrée de journal avec une valeur absolue inférieure de l'estampille temporelle pour ledit ordinateur d'origine spécifique et pour ledit objet spécifique ;
l'ordinateur cache (902 ; 905 ; 906) ayant en outre un moyen pour :
recevoir de nouvelles entrées de journal d'un ordinateur d'origine d'une pluralité d'ordinateurs d'origine (903, 904, 907, 908, 909) stockant des objets à des intervalles de temps prédéfinis, dans lequel des entrées de journal sont générées sur les ordinateurs d'origine lorsque des objets d'origine sont modifiés ;
recevoir (810) d'un autre ordinateur cache une demande (190-1) pour un objet en cache (190) avec l'identifiant de l'ordinateur d'origine de l'objet et avec une estampille temporelle relative,
vérifier (552, 812) la validité de la copie de l'objet demandé stocké dans le cache de l'ordinateur cache en comparant l'estampille temporelle relative la plus récente pour l'objet dans le journal de l'ordinateur cache avec l'estampille temporelle relative reçue ; la copie étant valide si l'estampille temporelle relative la plus récente a été générée plus tard que l'estampille temporelle reçue ;
si la copie stockée dans le cache de l'ordinateur cache est valide, répondre à ladite demande avec ladite copie ;
si la copie stockée dans le cache de l'ordinateur cache est invalide, réaliser les étapes suivantes (a), (b), (c) et (d) :
(a) effacer des copies invalides de l'objet du cache ;
(b) identifier (554, 814) si un troisième ordinateur cache est fournisseur d'une copie de l'objet en utilisant une matrice de prétraitement stockée sur l'ordinateur cache ;
(c) si la matrice de prétraitement de l'ordinateur cache indique qu'une copie de l'objet est stockée dans le cache d'un troisième ordinateur cache, réaliser les étapes consistant à :
transférer (556, 816) la demande pour l'objet dudit ordinateur d'origine avec ladite estampille temporelle relative de l'ordinateur cache au troisième ordinateur ; et
recevoir (818) la copie du troisième cache pour répondre à la demande si la copie stockée dans le cache du troisième ordinateur cache est valide, dans lequel le troisième ordinateur cache vérifie la validité de la copie de l'objet stocké dans le cache du troisième ordinateur cache en comparant l'estampille temporelle relative la plus récente pour l'objet dans le journal du troisième ordinateur cache avec l'estampille temporelle relative reçue ; la copie étant valide si l'estampille temporelle relative la plus récente a été générée plus tard que l'estampille temporelle reçue ;
remplacer (560) sur l'ordinateur cache la copie stockée dans le cache de l'ordinateur cache par la copie reçue du troisième ordinateur cache ;
mettre à jour (470 ; 580 ; 780) la matrice de prétraitement de l'ordinateur cache en fonction du cache mis à jour ;
envoyer (790) la matrice de prétraitement mise à jour au troisième ordinateur cache afin que le troisième ordinateur synchronise (480 ; 590 ; 840) une matrice de prétraitement stockée dans le troisième ordinateur avec la matrice de prétraitement mise à jour de l'ordinateur cache ; et
(d) si aucune copie en cache ne peut être trouvée dans les ordinateurs cache, l'ordinateur cache récupérant l'objet d'origine directement de l'ordinateur d'origine correspondant, répondant à ladite demande, stockant une copie dudit objet récupéré dans son cache et mettant à jour sa matrice de prétraitement en fonction de son cache mis à jour.

7. Ordinateur cache (902 ; 905 ; 906) selon la revendication 6, ayant en outre un moyen pour :
envoyer (813) un message à l'autre ordinateur cache si la copie stockée dans le cache est invalide.

8. Support de données lisible par un ordinateur, le support de données stockant une pluralité d'instructions d'un produit de programme informatique pour exécuter les étapes du produit de programme informatique selon la revendication 3.
